# EUROPÄISCHE PATENTSCHRIFT

(11) **EP 2 420 905 B1**
(45) Veröffentlichungstag und Bekanntmachung des Hinweises auf die Patenterteilung: **10.10.2018**
(21) Anmeldenummer: 11177984.9
(22) Anmeldetag: 18.08.2011
(51) Int. Cl.: G05B 19/18

(54) **Verfahren und Vorrichtung zum Erzeugen von Steuerdaten zur Ausbildung einer Zahnflanke durch fräsende Bearbeitung eines Werkstücks an einer Werkzeugmaschine**
Method and device for generating control data for creating a tooth flank by means of machining a workpiece on a machine tool
Procédé et dispositif de production de données de commande pour la formation d'un flanc de dent à l'aide d'un traitement par fraisage d'une pièce usinée sur une machine-outil

(30) Priorität: 18.08.2010 DE 102010039491
(43) Veröffentlichungstag der Anmeldung: 22.02.2012
(73) Patentinhaber: DECKEL MAHO Pfronten GmbH, 87459 Pfronten (DE)
(72) Erfinder: Neumaier, Josef, 87459 Pfronten (DE); Lochbihler, Thomas, 6682 Vils (AT); Hansen, Uwe-Carsten, 87637 Eisenberg (DE)
(74) Vertreter: MERH-IP Matias Erny Reichl Hoffmann Patentanwälte PartG mbB

(56) Entgegenhaltungen:
- WO-A1-2008/133517
- SCHOSSIG H-P: "AUF EINFACHEM WEG ZU GUTEN ZAEHNEN", WERKSTATT + BETRIEB, CARL HANSER VERLAG, MÜNCHEN DE, Bd. 140, Nr. 4, 1. Januar 2007 (2007-01-01), Seiten 28-30,32, XP001540544, ISSN: 0043-2792
- Prof. Dr.-Ing. Andreas Ettemeyer, Dipl.-Ing. Otto Olbrich: "KonstruktionselementeKapitel 14: Getriebe", Fachhochschule München , 1. März 2007 (2007-03-01), XP002761386, Gefunden im Internet: URL:www.fb06.fh-muenchen.de/fb/index.php/d e/download?f_id=2301 [gefunden am 2016-09-01]

## Beschreibung

Die vorliegende Erfindung betrifft ein Verfahren und eine Vorrichtung zum Erzeugen von Steuerdaten zur Ausbildung einer Zahnflanke durch fräsende Bearbeitung eines Werkstücks an einer zumindest 5 Achsen umfassenden, numerisch gesteuerten Werkzeugmaschine durch sukzessives Abfahren von Bearbeitungsbahnen mit einem Fräswerkzeug der Werkzeugmaschine auf Grundlage der erzeugten Steuerdaten.

Insbesondere betrifft die vorliegende Erfindung ein Verfahren und eine Vorrichtung zum Erzeugen von Steuerdaten zur Ausbildung einer Zahnflanke durch fräsende Bearbeitung eines Werkstücks an einer zumindest 5 Achsen umfassenden, numerisch gesteuerten Universal-Werkzeugmaschine wie z.B. einer Fräsmaschine, einer Universalfräsmaschine oder einem Bearbeitungszentrum, wobei die Zahnflanke entsprechend einer vorgegebenen Zahnflankengeometrie durch abzeilendes Verfahren eines Fräswerkzeugs der Werkzeugmaschine entlang der von den Steuerdaten vorgegebenen Bearbeitungsbahnen gesteuert wird, um abzeilend Material von dem Werkstück zerspanend abzutragen und so eine Zahnflanke herauszuarbeiten.

Weiterhin betrifft die vorliegende Erfindung ein Verfahren und eine Vorrichtung zum Erzeugen von Steuerdaten zur Fertigung eines eine Verzahnung aufweisenden Werkstücks mit den Schritten Vorgeben von Verzahnungsinformationsdaten, Berechnen eines Modells des Werkstücks auf Grundlage der vorgegebenen Verzahnungsinformationsdaten, umfassend den Schritt Berechnen einer vorgegebenen Zahnflankengeometrie auf Grundlage der vorgegebenen Verzahnungsinformationsdaten, und Erzeugen von Steuerdaten zur Fertigung des Werkstücks, umfassend den Schritt Erzeugen von Steuerdaten zur Ausbildung zumindest einer Zahnflanke der Verzahnung auf dem Werkstück.

Weiterhin betrifft die vorliegende Erfindung eine numerisch gesteuerte, zumindest 5 Achsen umfassende Werkzeugmaschine, insbesondere Universal-Fräsmaschine wie z.B. einer Fräsmaschine, einer Universalfräsmaschine oder einem Bearbeitungszentrum, zum fräsenden Bearbeiten eines Werkstücks durch sukzessives Abfahren von Bearbeitungsbahnen mit einem Fräswerkzeug der Werkzeugmaschine auf Grundlage von erzeugten Steuerdaten, wobei die Werkzeugmaschine insbesondere eine Vorrichtung zum Erzeugen von Steuerdaten umfasst.

Schließlich betrifft die vorliegende Erfindung ein Computerprogrammprodukt, wobei ein Computerprogramm in der Form einer Abfolge von Zuständen auf einem Speichermedium gespeichert ist, die Befehlen entspricht, die eingerichtet sind von einem Datenverarbeitungsmittel einer Datenverarbeitungseinrichtung verarbeitet zu werden, derart dass eine Vorrichtung zum Erzeugen von Steuerdaten gebildet wird.

### Hintergrund der Erfindung

Aus dem Stand der Technik ist es herkömmlich bekannt, Zahnräder oder andere eine Verzahnung aufweisende Werkstücke an speziellen verzahnungsbildenden Werkzeugmaschinen zu fertigen, d.h. auf speziellen Einzweckmaschinen. Zum Beispiel sind spezielle Wälzfräsmaschinen bekannt, an denen ein Zahnprofil an einem Werkstück herausgearbeitet wird, indem ein Profilwälzfräser oder eine Profilschleifscheibe derart gesteuert wird, dass Zahnflanken bzw. Zähne in dem Werkstück herausgearbeitet werden. Hierbei weisen die Wälzfräswerkzeuge oder Profilscheiben bereits im Querschnitt eine Form entsprechend der gewünschten Profilform der zu fertigenden Zahnflanken auf dem Werkstück auf. Indem das Wälzfräswerkzeug oder die Profilscheibe entlang einer Bahn durch das Werkstück gesteuert wird, entsteht hierbei eine oder zwei gegenüberliegenden Zahnflanken, die das Profil entsprechend der Form des Werkzeugs aufweisen.

Des Weiteren sind herkömmlich Verzahnungsmaschinen bekannt, die ebenfalls zu den Einzweckmaschinen gezählt werden und bei denen eine Verzahnung eines Zahnrads mittels eines Messerkopfwerkzeugs, zum Beispiel gemäß den Klingelnberg-, Gleason-, oder Oerlikonverfahren hergestellt werden. Auch hierbei wird die spätere Zahnflankenform durch die Form der Messerschneiden des Messerkopfwerkzeugs vorgegeben.

Die vorstehend beschriebenen bekannten Verfahren zum Herstellen einer Verzahnung auf einem Werkstück weisen den Nachteil auf, dass nach der Bearbeitung des Werkstücks eine Nachbearbeitung des Werkstücks erforderlich ist. Zum Beispiel ist es für eine Modellierung bzw. Optimierung des Tragbilds, die zum Beispiel für das Optimieren des Laufverhaltens des die Verzahnung aufweisenden Werkstücks bei einer bestimmten Last erforderlich ist, ein zusätzlicher Arbeitsschritt erforderlich ist, bei dem die Zahnflanken der Verzahnung des Werkstücks entsprechend des gewünschten Tragbilds nachbearbeitet werden müssen. Dies geschieht entweder manuell oder an einer weiteren Werkzeugmaschine.

Zum Beispiel beschreibt die WO 2008/045572 A1 eine derartige Nachbearbeitung eines eine Verzahnung aufweisenden Werkstücks zum nachträglichen Nachbearbeiten der Zahnflanken zur Modifizierung der Zahnflankengeometrie, um ein gewünschtes Tragbildverhalten zu erhalten. Gemäß der Lehre der WO 2008/045572 A1 erfolgt die Nachbearbeitung durch läppende Bearbeitung, jedoch kann eine derartige Nachbearbeitung zum Beispiel auch schleifend oder durch andere feinzerspanende Bearbeitungen bewerkstelligt werden.

Eine derartige Nachbearbeitung ist jedoch sehr aufwendig und macht es zudem erforderlich, ein Tragbild der Verzahnung ohne Last oder unter Last zu prüfen und, falls es noch nicht dem gewünschten Tragbild entspricht, eine weitere Nachbearbeitung der Zahnflanken durchzuführen.

Die vorliegende Erfindung betrifft nun jedoch eine neu entwickelte Methode zur Herstellung von eine Verzahnung aufweisenden Werkstücken an numerisch gesteuerten, zumindest 5 Achsen umfassenden Universal-Werkzeugmaschinen, wie zum Beispiel einer Fräsmaschine, einer Universalfräsmaschine oder einem Bearbeitungszentrum, bei der die Verzahnung auf dem Werkstück durch Standard-Fräswerkzeuge, wie zum Beispiel Schaftfräser mit oder ohne Endradius in einer abzeilenden Bearbeitung durch sukzessives Abfahren von Bearbeitungsbahnen eine Zahnflanke aus dem Werkstück herausgearbeitet wird. Im Gegensatz zu der Fertigung von eine Verzahnung aufweisenden Werkstücken an den vorstehend bekannten, herkömmlich benutzten verzahnungsbildenden Einzweckmaschinen ist die Erfindung auf das Ausbilden einer Verzahnung auf einem Werkstück auf Universal-Werkzeugmaschinen, wie z.B. einer Fräsmaschine, einer Universalfräsmaschine oder einem Bearbeitungszentrum, gerichtet.

Eine derartige Herstellung eines eine Verzahnung aufweisenden Werkstücks an einer Universal-Werkzeugmaschine wird zum Beispiel in dem Artikel "Auf einfachem Weg zu guten Zähnen - Zahnräder mit hoher Qualität auf Standardmaschinen fräsen" von Hans-Peter Schossig (erschienen in der Zeitschrift WERKSTATT UND BETRIEB, im Carl Hanser Verlag, München, Ausgabe 2007, Nr. 4/28, auf den Seiten 28 bis 32, ISSN 0043-2792) und der WO 2008/133517 A1 beschrieben. Ausgangspunkt der vorliegenden Erfindung ist diese neu entwickelte Methode und deren Weiterentwicklungen, die von der Anmelderin selbst entwickelt wurden (siehe zum Beispiel DE 10 2009 008 124).

### Zusammenfassung der Erfindung

Im Hinblick auf die vorstehend beschriebenen aus dem Stand der Technik bekannten Verfahren ist es eine Aufgabe der vorliegenden Erfindung, die Bearbeitung bzw. das Herstellen von eine Verzahnung aufweisenden Werkstücken weiter zu vereinfachen und die Möglichkeiten der fräsenden Bearbeitung eines Werkstücks an einer numerisch gesteuerten, zumindest 5 Achsen umfassenden Werkzeugmaschine, insbesondere Universal-Werkzeugmaschine wie zum Beispiel einer Fräsmaschine, einer Universalfräsmaschine, oder einem Bearbeitungszentrum, zu erweitern. Insbesondere ist es eine Aufgabe der vorliegenden Erfindung, ein Verfahren und eine Vorrichtung zum Erzeugen von Steuerdaten bereitzustellen, die die Möglichkeiten der neu entwickelten Verfahren zum Herstellen eines eine Verzahnung aufweisenden Werkstücks an einer Werkzeugmaschine, insbesondere Universal-Werkzeugmaschine, durch sukzessives bzw. abzeilendes Fräsen einer Zahnflanke auf dem Werkstück auf der Grundlage von erzeugten Steuerdaten zu erweitern. Insbesondere ist es eine weitere Aufgabe der vorliegenden Erfindung, es zu ermöglichen, ein eine Verzahnung aufweisendes Werkstück derart herzustellen, dass die zumindest eine Zahnflanke des Werkstücks auf einfache und effiziente Weise mit einem gewünschten Tragbild hergestellt werden kann.

Zur Lösung der vorstehend beschriebenen Aufgaben der vorliegenden Erfindung werden ein Verfahren zum Erzeugen von Steuerdaten zur Ausbildung einer Zahnflanke gemäß Anspruch 1, ein Verfahren zum Erzeugen von Steuerdaten zur Fertigung eines eine Verzahnung aufweisenden Werkstücks gemäß Anspruch 11, eine Vorrichtung zum Erzeugen von Steuerdaten zur Ausbildung einer Zahnflanke gemäß Anspruch 12, eine Vorrichtung zum Erzeugen von Steuerdaten zur Fertigung eines eine Verzahnung aufweisenden Werkstücks gemäß Anspruch 13, eine numerisch gesteuerte, zumindest 5 Achsen umfassende Werkzeugmaschine nach Anspruch 14 und ein Computerprogrammprodukt gemäß Anspruch 15 vorgeschlagen. Merkmale bevorzugter Ausführungsformen der vorliegenden Erfindung werden in den abhängigen Ansprüchen beschrieben.

Gemäß einem ersten Aspekt der vorliegenden Erfindung wird ein Verfahren zum Erzeugen von Steuerdaten zur Ausbildung einer Zahnflanke durch fräsende Bearbeitung eines Werkstücks an einer zumindest 5 Achsen umfassenden, numerisch gesteuerten Werkzeugmaschine, insbesondere an einer Universal-Werkzeugmaschine wie z.B. an einer Fräsmaschine, an einer Universalfräsmaschine oder an einem Bearbeitungszentrum, durch sukzessives Abfahren von Bearbeitungsbahnen mit einem Fräswerkzeug der Werkzeugmaschine auf Grundlage der erzeugten Steuerdaten vorgeschlagen. Das Verfahren umfasst erfindungsgemäß die folgenden Schritte: Vorgeben einer Zahnflankengeometrie, Festlegen eines Tragbildbereichs auf der vorgegebenen Zahnflankengeometrie, Festlegen von Parametern zur Veränderung der vorgegebenen Zahnflankengeometrie und Erzeugen von Steuerdaten auf Grundlage einer in Abhängigkeit des festgelegten Tragbildbereichs und der festgelegten Parameter veränderten Zahnflankengeometrie. Das Festlegen von Parametern zur Veränderung der vorgegebenen Zahnflankengeometrie umfasst ein Festlegen zumindest eines jeweiligen Rücknahmeparameters an zumindest einer festgelegten Rücknahmeposition auf der vorgegebenen Zahnflankengeometrie.

Gemäß der vorliegenden Erfindung wird somit eine Zahnflankengeometrie vorgegeben, zum Beispiel eine mathematisch exakte bzw. theoretische Zahnflankengeometrie entsprechend vorgegebener, die Zahnflankengeometrie bestimmender Informationen bzw. Daten, wie zum Beispiel Informationen bzw. Daten betreffend Verzahnungsart, Werkstückform, Werkstückgeometrie, Verzahnungsform bzw. Profilform, auf deren Grundlage zum Beispiel eine mathematisch exakte bzw. theoretische Zahnflankengeometrie numerisch berechnet werden kann, zum Beispiel mittels eines CAD-Programms.

Jedoch werden die Steuerdaten nicht direkt auf Grundlage der vorgegebenen Zahnflankengeometrie bzw. auf Grundlage eines Modells der vorgegebenen Zahnflankengeometrie erzeugt (wie es z.B. noch in der DE 10 2009 008 124 vorgesehen war), sondern vielmehr wird zudem erfindungsgemäß ein Tragbildbereich auf der vorgegebenen Zahnflankengeometrie festgelegt und des Weiteren werden Parameter zur Veränderung der vorgegebenen Zahnflankengeometrie festgelegt. Danach kann auf Grundlage der festgelegten Parameter zur Veränderung der vorgegebenen Zahnflankengeometrie und dem festgelegten Tragbildbereich auf der vorgegebenen Zahnflankengeometrie eine modifizierte bzw. veränderte Zahnflankengeometrie berechnet werden, wobei erfindungsgemäß die Steuerdaten dann auf Grundlage der veränderten Zahnflankengeometrie erzeugt werden.

Dies hat den Vorteil, dass die Bearbeitung des Werkstücks an der Werkzeugmaschine auf Grundlage der Steuerdaten entsprechend der veränderten Zahnflankengeometrie durchgeführt wird, so dass das fertige Werkstück nach der Bearbeitung bereits eine Zahnflanke mit einer tatsächlichen Zahnflankengeometrie entsprechend der veränderten Zahnflankengeometrie aufweist. Somit sind Nachbearbeitungen der Zahnflanke(n) zum Beispiel zum Optimieren bzw. Modellieren eines Tragbilds nicht erforderlich. Vielmehr kann die Zahnflanke oder die Zahnflanken direkt auf Grundlage der Steuerdaten derart herausgearbeitet werden, derart dass ohne erforderliches Nachbearbeiten bereits ein gewünschtes Tragbildverhalten auftritt.

Die vorliegende Erfindung ermöglicht es somit auf einfache und effiziente Art und Weise, eine Zahnflankengeometrie, die einer mathematisch exakten bzw. theoretisch exakten Zahnflankengeometrie entspricht, bereits vor Erzeugen der Steuerdaten zu verändern, zum Beispiel in Abhängigkeit eines gewünschten Tragbilds. Somit kann die Vielseitigkeit der neu entwickelte Verfahren zum Herstellen eines eine Verzahnung aufweisenden Werkstücks an einer zumindest 5 Achsen umfassenden, numerisch gesteuerten Werkzeugmaschine durch sukzessives Abfahren von Bearbeitungsbahnen bzw. abzeilendes Bearbeiten der Zahnflanke mit einem Fräswerkzeug, wie zum Beispiel einem Schaftfräser oder ähnlicher Fräswerkzeuge, signifikant erweitert werden.

Insbesondere kann die Zahnradherstellung im Vergleich zu Verfahren mittels Wälzfräs- bzw. Wälzschleifverfahren oder mittels Messerkopfverfahren, wie zum Beispiel dem Klingelnberg-, Gleason-, oder Oerlikonverfahren, verbessert, vereinfacht und im Anwendungsbereich erweitert werden, da die Herstellung einer modifizierten Zahnflankengeometrie direkt auf Grundlage der erzeugten Steuerdaten vorgenommen werden kann, wobei bei den vorstehend beschriebenen herkömmlichen Verfahren eine Profilform im Wesentlichen durch die Werkzeugform vorgegeben ist und somit zur Modellierung eines Tragbilds eine nachträgliche Bearbeitung erforderlich ist.

Vorzugsweise umfasst der Schritt Erzeugen von Steuerdaten die Berechnung eines Modells der geänderten Zahnflankengeometrie auf Grundlage der vorgegebenen Zahnflankengeometrie, des festgelegten Tragbildbereichs und der festgelegten Parameter.

Dies hat den Vorteil, dass ein Modell der geänderten Zahnflankengeometrie vorliegt bzw. berechnet ist, das von dem Modell einer mathematisch exakten bzw. theoretischen Zahnflankengeometrie entsprechend des festgelegten Tragbildbereichs und der festgelegten Parameter zur Veränderung der vorgegebenen Zahnflankengeometrie abweicht, wobei auf Grundlage des Modells der geänderten Zahnflankengeometrie auf einfache und gegebenenfalls automatisierte Weise Steuerdaten, wie zum Beispiel ein NC-Programm, auf Grundlage des Modells der geänderten Zahnflankengeometrie erzeugt werden kann.

Vorzugsweise wird die Modifikation der Zahnflankengeometrie derart vorgenommen, dass bei der geänderten Zahnflankengeometrie ein dem festgelegten Tragbildbereich entsprechender Bereich im Vergleich zu der vorgegebenen Zahnflankengeometrie nicht verändert ist, insbesondere wobei die geänderte Zahnflankengeometrie nur außerhalb des festgelegten Tragbildbereichs von der vorgegebenen Zahnflankengeometrie abweicht.

Dies hat den Vorteil, dass in dem Schritt des Festlegens eines Tragbildbereichs auf der vorgegebenen Zahnflankengeometrie auf einfache Weise ein Bereich vorgegeben werden kann, in dem die Zahnflankengeometrie im Vergleich zu der vorgegebenen Zahnflankengeometrie, zum Beispiel also im Vergleich zu der mathematisch exakten bzw. theoretischen Zahnflankengeometrie, nicht verändert bzw. nicht modifiziert wird. Es kann somit auf einfache Weise ein Bereich auf der Zahnflanke definiert werden, in dem die veränderte Zahnflankengeometrie der vorgegebenen Zahnflankengeometrie entspricht, d.h. in dem die Zahnflanke trotz Veränderung bzw. Modifikation der Zahnflankengeometrie weiterhin die Geometrie der vorgegebenen Zahnflankengeometrie aufweist. Außerhalb des festgelegten Tragbildbereichs kann die Geometrie der Zahnflanke von der vorgegebenen Zahnflankengeometrie in Abhängigkeit der festgelegten Parameter abweichen.

Vorzugsweise entspricht die vorgegebene Zahnflankengeometrie einer Zahnflankengeometrie mit maximalem Tragbild über die Zahnflanke beim lastfreien Abrollen der Zahnflanke mit einer Gegenflanke.

Somit entspricht die vorgegebene Zahnflankengeometrie einer mathematisch exakten bzw. theoretischen Zahnflankengeometrie, bei der die Zahnflanke beim lastfreien Abrollen mit einer Gegenflanke, insbesondere beim Abrollen mit einer ebenfalls mathematisch exakten bzw. theoretischen Gegenflanke, während des Abrollens im Wesentlichen über die gesamte Zahnflanke in Kontakt kommt und somit ein im Wesentlichen maximales Tragbild über die Zahnflanke aufweist, vorzugsweise im Wesentlichen über die gesamte Zahnflanke.

Vorzugsweise beschreibt der festgelegte Tragbildbereich nach Veränderung der Zahnflankengeometrie ein Tragbild beim lastfreien Abrollen der Zahnflanke mit einer Gegenflanke, insbesondere derart, dass die geänderte Zahnflankengeometrie vorzugsweise einer Zahnflankengeometrie entspricht, die beim lastfreien Abrollen mit einer Gegenflanke ein dem festgelegten Tragbildbereich entsprechendes Tragbild aufweist.

Dies hat den Vorteil, dass durch das Festlegen des Tragbildbereichs der Bereich festgelegt werden kann, der beim lastfreien Abrollen mit der Gegenflanke das entstehende Tragbild festlegt bzw. vorgibt. Dies kann bewerkstelligt werden, indem der festgelegte Tragbildbereich demjenigen Bereich auf der Zahnflanke entspricht, der bei der veränderten Zahnflankengeometrie im Vergleich zu der vorgegebenen Zahnflankengeometrie, die vorzugsweise einer mathematisch exakten bzw. theoretischen Zahnflankengeometrie entspricht, nicht modifiziert wird, so dass die geänderte Zahnflankengeometrie in dem festgelegten Tragbildbereich weiterhin eine Geometrie aufweist, die einer mathematisch exakten bzw. theoretischen Zahnflankengeometrie entspricht.

Vorzugsweise wird der Tragbildbereich derart festgelegt, dass beim lastfreien Abrollen der Zahnflanke mit einer Gegenflanke ein Tragbild mit gewünschter Größe, Gestalt und/oder Lage resultiert.

Dies hat den Vorteil, dass das Tragbild der Zahnflanke beim lastfreien Abrollen mit der Gegenflanke entsprechend des festgelegten Tragbildbereichs festgelegt bzw. vorgegeben werden kann, wobei ein tatsächliches Tragbild im Wesentlichen entsprechend einer gewünschten Größe des Tragbilds, einer gewünschten Gestalt des Tragbilds und/oder einer gewünschten Lage des Tragbilds auf der Zahnflanke resultiert.

Vorzugsweise umfasst das Festlegen des Tragbildbereichs Festlegen einer Form des Tragbildbereichs, Festlegen einer Position des Tragbildbereichs auf der Zahnflanke, Festlegen einer Größe des Tragbildbereichs und/oder Festlegen einer Ausrichtung des Tragbildbereichs auf der Zahnflanke.

Dies hat den Vorteil, dass der Schritt des Festlegens des Tragbildbereichs es ermöglicht, das Tragbild beim lastfreien Abrollen der Zahnflanke mit der Gegenflanke mit gewünschter Größe, Gestalt und/oder Lage festzulegen bzw. vorzugeben. Hierfür ist es auf einfache Weise lediglich erforderlich, eine Form des Tragbilds festzulegen bzw. vorzugeben, zum Beispiel durch Auswählen einer Form des Tragbilds aus einer Mehrzahl von vorgegebenen Grundformen, eine Position des Tragbildbereichs auf der Zahnflanke festzulegen bzw. vorzugeben, zum Beispiel durch Vorgeben von Positionsdaten bzw. Koordinaten auf der Zahnflanke, eine Größe des Tragbildbereichs festzulegen bzw. vorzugeben, zum Beispiel durch Vorgeben von die Größe des Tragbildbereichs bestimmenden Parametern in Abhängigkeit der festgelegten Form des Tragbildbereichs, und/oder eine Ausrichtung des Tragbildbereichs auf der Zahnflanke festzulegen bzw. vorzugeben, zum Beispiel durch Vorgabe einer Winkelausrichtung der festgelegten Form des Tragbildbereichs auf der Zahnflanke.

Vorzugsweise wird die Form der Tragbildfläche als kreisförmig, ellipsenförmig, rechteckig, quadratisch oder trapezförmig festgelegt.

Somit kann die Form der Tragbildfläche entsprechend einer geometrischen Grundform festgelegt bzw. vorgegeben werden, für die die Position, Größe, und/oder Ausrichtung auf der Zahnflanke mit einfachen Parametern festgelegt werden kann. Vorzugsweise umfasst der Schritt des Festlegens einer Form des Tragbildbereichs den Schritt Auswählen der Form der Tragbildfläche aus einer Gruppe von geometrischen Grundformen, z.B. Auswählen der Form aus einer der folgenden Formen: Kreis, Ellipse, Rechteck, Quadrat oder Trapez. Bei einem Kreis kann die Position des Tragbilds auf der Zahnflanke z.B. durch Angabe des Kreismittelpunkts festgelegt werden und die Größe z.B. durch Festlegen des Radius. Bei Ellipsen wird die Größe des Tragbildbereichs vorzugsweise durch die beiden Hauptachsen oder Halbachsen der Ellipse vorgegeben und die Position des Tragbildbereichs vorzugsweise durch den Schnittpunkt der beiden Hauptachsen bzw. Halbachsen der Ellipse. Eine Ausrichtung des Tragbildbereichs auf der Zahnflanke kann bei einer Ellipse zum Beispiel durch Vorgeben eines Ausrichtungswinkels einer der Hauptachsen der Ellipse festgelegt werden.

Bei Quadraten kann die Größe des Tragbildbereichs z.B. durch eine Seitenlänge und bei Rechtecken z.B. durch zwei Seitenlängen festgelegt werden. Die Position des Tragbildbereichs kann z.B. jeweils durch den Mittelpunkt oder auch durch einen oder mehrere Eckpunkte vorgegeben werden. Die Festlegung der Größe des Tragbildbereichs bei einer trapezförmigen Ausformung erfordert im Allgemeinen zumindest drei Parameter, zum Beispiel Festlegen zweier gegenüberliegender Seiten des Trapezes und deren Abstand. Bei Rechtecken, Quadraten oder Trapezen kann die Ausrichtung des Tragbildbereichs durch Festlegen eines Ausrichtungswinkels einer Seite des Tragbildbereichs festgelegt werden.

Vorzugsweise werden die Parameter zur Veränderung der vorgegebenen Zahnflankengeometrie derart festgelegt, dass beim Abrollen der Zahnflanke mit einer Gegenflanke unter Last ein Tragbild mit gewünschter Größe, Gestalt und/oder Lage resultiert.

Dies hat den Vorteil, dass die Veränderung der Zahnflankengeometrie in Abhängigkeit der festgelegten Parameter zur Veränderung der vorgegebenen Zahnflankengeometrie es ermöglicht, ein Tragbild bei Abrollen der Zahnflanke mit einer Gegenflanke unter Last, zum Beispiel unter einem bestimmten Lastwert, mit einer gewünschten Größe, Gestalt und/oder Lage festzulegen oder vorzugeben. Somit kann bereits vor Erzeugen der Steuerdaten vorteilhaft ein Tragbild mit gewünschter Größe, Gestalt und/oder Lage festgelegt werden, das bei dem fertigen Werkstück bei Abrollen der herausgearbeiteten Zahnflanke mit einer Gegenflanke unter einem bestimmten Lastwert auftritt, zum Beispiel bei dem Lastwert entsprechend der vorgesehenen Belastung des die Verzahnung aufweisenden Werkstücks bei dem vorgesehenen Betrieb.

Dass der Schritt Festlegen von Parametern zur Veränderung der vorgegebenen Zahnflankengeometrie den Schritt Festlegen zumindest eines jeweiligen Rücknahmeparameters an zumindest einer festgelegten Rücknahmeposition auf der vorgegebenen Zahnflankengeometrie umfasst, hat den Vorteil, dass auf besonders einfache Art und Weise außerhalb des festgelegten Tragbildbereichs an festgelegten Rücknahmepositionen eine Rücknahme der Zahnflankengeometrie definiert werden kann, indem ein jeweiliger Rücknahmeparameter an den festgelegten Rücknahmepositionen festgelegt wird.

Vorzugsweise ist die veränderte Zahnflankengeometrie im Vergleich zu der vorgegebenen Zahnflankengeometrie an jeder der zumindest einen festgelegten Rücknahmepositionen entsprechend des jeweiligen festgelegten Rücknahmeparameters zurückgenommen.

Dies hat den Vorteil, dass bereits vor Erzeugen der Steuerdaten an bestimmten Rücknahmepositionen jeweilige festgelegte Rücknahmeparameter bestimmt werden können, wobei die Zahnflankengeometrie bereits vor Bearbeitung des Werkstücks, d.h. noch vor bzw. während des Erzeugens der Steuerdaten, entsprechend der festgelegten Rücknahmeparameter an den jeweiligen Rücknahmepositionen zurückgenommen wird. Somit kann ein Verzahnungsfachmann, der bislang z.B. mit dem Nachbearbeiten von Zahnflanken zum Modellieren eines Zahnrads vertraut ist, seine Erfahrungswerte einfließen lassen, indem er Rücknahmeparameter an festgelegten Rücknahmepositionen vorgeben kann, die seinen Erfahrungen beim bearbeitenden Zurücknehmen der Zahnflanke bei einer Nachbearbeitung entsprechen.

Vorzugsweise wird dann auf Grundlage der veränderten Zahnflankengeometrie ein Modell der veränderten Zahnflankengeometrie berechnet, welches entsprechend der festgelegten Rücknahmeparameter an den jeweiligen festgelegten Rücknahmepositionen bereits zurückgenommen ist, z.B. entsprechend einer Zahnflankengeometrie, wie sie entstehen würde, wenn an herkömmlichen Verzahnungsmaschinen eine exakte Zahnflankengeometrie hergestellt wird, nach einer weiteren Nachbearbeitung zum Modellieren des Tragbilds.

Vorzugsweise umfasst das Verfahren den weiteren Schritt Festlegen einer oder mehrerer Rücknahmepositionen auf der vorgegebenen Zahnflankengeometrie.

Dies hat den Vorteil, dass zusätzlich zu den Rücknahmeparametern weiterhin die Rücknahmepositionen festgelegt werden können, an denen die Zahnflankengeometrie entsprechend der vorgegebenen Rücknahmeparameter vor bzw. während des Erzeugens der Steuerdaten zurückgenommen wird, zum Beispiel an dem Modell der Zahnflankengeometrie.

Vorzugsweise ist zumindest eine Rücknahmeposition auf einer Außenseite der vorgegebenen Zahnflankengeometrie positioniert. Vorzugsweise ist zumindest eine Rücknahmeposition an einer Ecke der vorgegebenen Zahnflankengeometrie positioniert. Vorzugsweise ist zumindest eine Rücknahmeposition zwischen zwei benachbarten Ecken der vorgegebenen Zahnflankengeometrie positioniert. Vorzugsweise werden die Rücknahmepositionen derart festgelegt, insbesondere bevorzugt zumindest acht Rücknahmepositionen, dass vier Rücknahmepositionen jeweils an einer Ecke der vorgegebenen Zahnflankengeometrie positioniert sind, und/oder jeweils eine Rücknahmeposition zwischen zwei benachbarten Ecken der vorgegebenen Zahnflankengeometrie positioniert ist.

Dies hat den Vorteil, dass eine oder mehrere Rücknahmepositionen bereits an bestimmten Positionen der Zahnflanke vorgegeben sein können, wobei für jeweilige Werkstücke bzw. jeweilige herauszuarbeitende Zahnflanken jeweils nur noch Rücknahmeparameter an den jeweils vorgegebenen Rücknahmepositionen festgelegt werden müssen und die Rücknahmepositionen bereits an optimierten Positionen auf der Zahnflanke vorgegeben sind.

Vorzugsweise wird die Zahnflankengeometrie im Vergleich zu der vorgegebenen Zahnflankengeometrie derart verändert, dass die Zahnflankengeometrie in dem festgelegten Tragbildbereich nicht modifiziert wird und an den jeweiligen festgelegten Rücknahmepositionen entsprechend der jeweiligen festgelegten Rücknahmeparameter zurückgenommen ist und der Übergang zwischen den Rücknahmepositionen und den Rücknahmepositionen und der Tragbildfläche vorzugsweise gleichmäßig berechnet wird, vorzugsweise während des Schritts Berechnen eines Modells der veränderten Zahnflankengeometrie. Vorzugsweise ist insbesondere der Übergang der Zahnflankengeometrie an der Außenseite des festgelegten Tragbildbereichs gleichmäßig bzw. tangential. Somit kann eine besonders gleichmäßige Geometrie der zurückgenommenen veränderten Zahnflankengeometrie erreicht werden.

Vorzugsweise umfasst das Verfahren den weiteren Schritt Darstellen eines Modells der veränderten Zahnflankengeometrie.

Dies hat den Vorteil, dass die veränderte Zahnflankengeometrie optisch geprüft werden kann, um noch vor Erzeugen der Steuerdaten auf Grundlage des berechneten Modells gegebenenfalls in weiteren Schritten erneut korrigierte Rücknahmeparameter festzulegen bzw. den Tragbildbereich erneut festzulegen, bis das dargestellte Modell der veränderten Zahnflankengeometrie einer gewünschten veränderten Zahnflankengeometrie entspricht, bevor dann auf Grundlage der gewünschten veränderten Zahnflankengeometrie die Steuerdaten erzeugt werden können.

Vorzugsweise umfasst das Verfahren weiterhin Festlegen eines Lastwerts. Vorzugsweise umfasst das Verfahren weiterhin Darstellen des zu erwartenden Tragbilds beim Abrollen der Zahnflanke mit einer Gegenflanke unter Last entsprechend des festgelegten Lastwerts auf dem Modell der veränderten Zahnflankengeometrie.

Dies hat den Vorteil, dass ein bestimmter Lastwert, zum Beispiel entsprechend des später vorgesehenen Betriebs des Werkstücks beim Abrollen mit dem Gegenstück festgelegt werden kann, wobei das zu erwartende Tragbild beim Abrollen der Zahnflanke mit einer Gegenflanke unter Last entsprechend dieses festgelegten Lastwerts auf dem Modell der veränderten Zahnflankengeometrie dargestellt wird, so dass überprüft werden kann, ob das zu erwartende Tragbild bei dem festgelegten Lastwert dem gewünschten Tragbild in Größe, Gestalt und/oder Lage entspricht. Dies kann z.B. annähernd dadurch erreicht werden, dass bei dem Darstellen der veränderten Zahnflankengeometrie auf der veränderten Zahnflankengeometrie Höhenlinien dargestellt werden, die die Veränderung bzw. Modifikation im Vergleich zur vorgegebenen Zahnflankengeometrie angeben. Derartige Höhenlinien können näherungsweise ein Tragbildverhalten unter ansteigenden Lasten anzeigen.

Vorzugsweise umfasst der Schritt Vorgeben einer Zahnflankengeometrie den Schritt
Vorgeben von Verzahnungsinformationsdaten. Vorzugsweise umfasst der Schritt Vorgeben einer Zahnflankengeometrie den weiteren Schritt Berechnen der vorgegebenen Zahnflankengeometrie auf Grundlage der vorgegebenen Verzahnungsinformationsdaten.

Vorzugsweise umfassen die Verzahnungsinformationsdaten Daten, die eine Größe und Form des Werksstücks angeben, Daten, die eine Art der Bauform der Verzahnung angeben, insbesondere eine Bauform aus den Bauformen Stirnrad, Kegelrad, Tellerrad, Zylinderrad und Zahnstange, Daten, die eine Verzahnungsart angeben, insbesondere eine Verzahnungsform aus den Verzahnungsformen Geradverzahnung, Schrägverzahnung, Bogenverzahnung, Spiralverzahnung, Daten, die eine Zahnflankenprofilform angeben, insbesondere ein Zahnflankenprofil aus den Zahnflankenprofilformen Evolventenprofil, Zykloidprofil, und Kreisbogenprofil, Daten, die eine Größe und Form einer Zahngeometrie der Verzahnung angeben, und/oder Daten, die eine Zahl der Zähne der Verzahnung angeben.

Dies hat den Vorteil, dass die vorgegebene Zahnflankengeometrie auf einfache Weise durch Vorgeben von Verzahnungsinformationsdaten vorgegeben werden kann, wobei für das Vorgeben der vorgegebenen Zahnflankengeometrie nur wenige Verzahnungsinformationsdaten vorgegeben werden müssen. Zum Beispiel können die Verzahnungsinformationsdaten Daten umfassen, die Größe und Form des Werkstücks angeben, Daten, die eine Art der Bauform der Verzahnung angeben, also zum Beispiel insbesondere, ob es sich um ein Stirnrad, Kegelrad, Tellerrad, Zylinderrad oder eine Zahnstange handeln soll. Weiterhin können Verzahnungsinformationsdaten vorgegeben werden, die Daten umfassen, die die gewünschte Verzahnungsart angeben, zum Beispiel ob eine Geradverzahnung, Schrägverzahnung, Bogenverzahnung oder Spiralverzahnung hergestellt werden soll. Weiterhin können in den Verzahnungsinformationsdaten Daten enthalten sein, die eine gewünschte ggf. mathematische Zahnflankenprofilform angeben, insbesondere zum Beispiel ein Evolventenprofil, ein Zykloidprofil oder ein Kreisbogenprofil. Weiterhin können die Verzahnungsinformationsdaten noch Daten enthalten, die eine Größe und Form der Zahngeometrie der Verzahnung angeben und/oder Daten, die eine Zahl der Zähne der Verzahnung angeben.

Insbesondere geben die Verzahnungsinformationsdaten vorzugsweise Daten an, die es ermöglichen, die mathematisch exakte, gewünschte Zahnflankengeometrie zu berechnen, insbesondere durch Berechnen eines Modells der vorgegebenen Zahnflankengeometrie oder auch Berechnen eines Modells des fertigen Werkstücks mit Verzahnung, die die vorgegebene Zahnflankengeometrie aufweist.

Gemäß einem zweiten Aspekt der Erfindung wird ein Verfahren zum Erzeugen von Steuerdaten zur Fertigung eines eine Verzahnung aufweisenden Werkstücks mit den folgenden Schritten vorgeschlagen: Vorgeben von Verzahnungsinformationsdaten, Berechnen eines Modells des Werkstücks auf Grundlage der vorgegebenen Verzahnungsinformationsdaten, umfassend den Schritt Berechnen einer vorgegebenen Zahnflankengeometrie auf Grundlage der vorgegebenen Verzahnungsinformationsdaten, und Erzeugen von Steuerdaten zur Fertigung des Werkstücks, umfassend den Schritt Erzeugen von Steuerdaten zur Ausbildung einer Zahnflanke der Verzahnung auf dem Werkstück gemäß einem Verfahren nach dem vorstehend beschriebenen ersten Aspekt der Erfindung, bevorzugt in Verbindung mit einem oder mehreren der vorstehend beschriebenen bevorzugten Ausführungen eines Verfahren nach dem vorstehend beschriebenen ersten Aspekt der Erfindung.

Gemäß einem dritten Aspekt der Erfindung wird eine Vorrichtung zum Erzeugen von Steuerdaten zur Ausbildung einer Zahnflanke durch fräsende Bearbeitung eines Werkstücks an einer zumindest 5 Achsen umfassenden, numerisch gesteuerten Werkzeugmaschine, insbesondere an einer Fräsmaschine, an einer Universalfräsmaschine oder an einem Bearbeitungszentrum, durch sukzessives Abfahren von Bearbeitungsbahnen mit einem Fräswerkzeug der Werkzeugmaschine auf Grundlage der erzeugten Steuerdaten vorgeschlagen, wobei die Steuerdaten bevorzugt nach einem Verfahren gemäß des ersten oder zweiten Aspekts der Erfindung erzeugt werden. Die Vorrichtung umfasst: ein erstes Eingabemittel zum Vorgeben einer Zahnflankengeometrie, ein zweites Eingabemittel zum Festlegen eines Tragbildbereichs auf der vorgegebenen Zahnflankengeometrie, ein drittes Eingabemittel zum Festlegen von Parametern zur Veränderung der vorgegebenen Zahnflankengeometrie und ein Steuerdatenerzeugungsmittel zum Erzeugen von Steuerdaten auf Grundlage einer in Abhängigkeit des festgelegten Tragbildbereichs und der festgelegten Parameter veränderten Zahnflankengeometrie.

Gemäß einem vierten Aspekt der Erfindung wird eine Vorrichtung zum Erzeugen von Steuerdaten zur Fertigung eines eine Verzahnung aufweisenden Werkstücks gemäß einem Verfahren des vorstehend beschriebenen zweiten Aspekt vorgeschlagen, umfassend: ein Eingabemittel zum Vorgeben von Verzahnungsinformationsdaten, ein Modellberechnungsmittel zum Berechnen eines Modells des Werkstücks auf Grundlage der vorgegebenen Verzahnungsinformationsdaten, umfassend Berechnen einer vorgegebenen Zahnflankengeometrie auf Grundlage der vorgegebenen Verzahnungsinformationsdaten, und ein Steuerdatenerzeugungsmittel zum Erzeugen von Steuerdaten zur Fertigung des Werkstücks, umfassend Erzeugen von Steuerdaten zur Ausbildung einer Zahnflanke der Verzahnung auf dem Werkstück gemäß einem Verfahren des ersten vorstehend beschriebenen Aspekts der, bevorzugt in Verbindung mit einem oder mehreren der vorstehend beschriebenen bevorzugten Ausführungen eines Verfahren nach dem vorstehend beschriebenen ersten Aspekt der Erfindung.

Die im Folgenden beschriebenen bevorzugten Ausführungsformen betreffen die vorstehend beschriebene Vorrichtung gemäß dem dritten oder vierten Aspekt der vorliegenden Erfindung.

Vorzugsweise umfasst die Vorrichtung ein Modellberechnungsmittel zum Berechnen eines Modells der geänderten Zahnflankengeometrie auf Grundlage der vorgegebenen Zahnflankengeometrie, des festgelegten Tragbildbereichs und der festgelegten Parameter. Das Modellberechnungsmittel kann in dem Steuerdatenerzeugungsmittel umfasst sein oder als separates Mittel vorgesehen sein.

Vorzugsweise umfasst die Vorrichtung bzw. das zweite Eingabemittel zum Festlegen des Tragbildbereichs Eingabemittel zum Festlegen einer Form des Tragbildbereichs, Eingabemittel zum Festlegen einer Position des Tragbildbereichs auf der Zahnflanke, Eingabemittel zum Festlegen einer Größe des Tragbildbereichs, und/oder Eingabemittel zum Festlegen einer Ausrichtung des Tragbildbereichs auf der Zahnflanke.

Vorzugsweise umfasst die Vorrichtung bzw. das dritte Eingabemittel zum Festlegen von Parametern zur Veränderung der vorgegebenen Zahnflankengeometrie Eingabemittel zum Festlegen zumindest eines jeweiligen Rücknahmeparameters an zumindest einer festgelegten Rücknahmeposition auf der vorgegebenen Zahnflankengeometrie. Vorzugsweise umfasst die Vorrichtung bzw. das dritte Eingabemittel zum Festlegen von Parametern zur Veränderung der vorgegebenen Zahnflankengeometrie weiterhin Eingabemittel zum Festlegen einer oder mehrerer Rücknahmepositionen (2a bis 2h) auf der vorgegebenen Zahnflankengeometrie (5).

Vorzugsweise umfasst die Vorrichtung ein Darstellungsmittel zum Darstellen eines Modells der veränderten Zahnflankengeometrie, zum Darstellen eines Modells der vorgegebenen Zahnflankengeometrie, zum Darstellen einer Rohteilgeometrie des Werkstücks, die eine Geometrie eines Rohteils des Werkstücks vor dem Herausarbeiten der Verzahnung angibt, und/oder zum Darstellen einer Fertigteilgeometrie des Werkstücks, die eine Geometrie eines Fertigteils des Werkstücks nach dem Herausarbeiten der Verzahnung angibt.

Vorzugsweise umfasst die Vorrichtung, das Eingabemittel zum Vorgeben bzw. Festlegen von Verzahnungsinformationsdaten oder auch das erste Eingabemittel weiterhin Eingabemittel zum Vorgeben von Daten, die eine Größe und Form bzw. Geometrie des Werksstücks angeben, Eingabemittel zum Vorgeben von Daten, die eine Art der Bauform der Verzahnung angeben, insbesondere eine Bauform aus den Bauformen Stirnrad, Kegelrad, Tellerrad, Zylinderrad und Zahnstange, Eingabemittel zum Vorgeben von Daten, die eine Verzahnungsform angeben, insbesondere eine Verzahnungsform aus den Verzahnungsformen Geradverzahnung, Schrägverzahnung, Bogenverzahnung, Spiralverzahnung, Eingabemittel zum Vorgeben von Daten, die eine Zahnflankenprofilform angeben, insbesondere eine Zahnflankenprofilform aus den Zahnflankenprofilformen Evolventenprofil, Zykloidprofil, und Kreisbogenprofil, Eingabemittel zum Vorgeben von Daten, die eine Größe und Form einer Zahngeometrie der Verzahnung angeben, und/oder Eingabemittel zum Vorgeben von Daten, die eine Zahl der Zähne der Verzahnung angeben.

Gemäß einem fünften Aspekt der Erfindung wird eine numerisch gesteuerte, zumindest 5 Achsen umfassende Werkzeugmaschine, insbesondere Fräsmaschine, Universalfräsmaschine oder Bearbeitungszentrum, zum fräsenden Bearbeiten eines Werkstücks durch sukzessives Abfahren von Bearbeitungsbahnen mit einem Fräswerkzeug der Werkzeugmaschine auf Grundlage von erzeugten Steuerdaten vorgeschlagen, die eine Vorrichtung zum Erzeugen von Steuerdaten gemäß des dritten oder vierten Aspekts umfasst.

Gemäß einem sechsten Aspekt der Erfindung wird ein Computerprogrammprodukt vorgeschlagen, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass eine Vorrichtung zum Erzeugen von Steuerdaten gemäß des dritten oder vierten Aspekts gebildet wird.

### Kurzbeschreibung der Figuren

Fig. 1 zeigt eine beispielhafte schematische Darstellung eines Zahns einer Verzahnung auf einem Werkstück.
Fig. 2 zeigt eine beispielhafte schematische Darstellung einer Zahnflanke.
Fig. 3 zeigt eine beispielhafte schematische Darstellung einer Zahnflanke mit einem gemäß einem Ausführungsbeispiel der vorliegenden Erfindung festgelegten Tragbildbereich und festgelegten Rücknahmepositionen.
Fig. 4A zeigt schematisch einen Schnitt durch die Rücknahmepositionen 2h und 2d ohne Berücksichtigung der Profilkrümmung der vorgegebenen Zahnflankengeometrie.
Fig. 4B zeigt schematisch einen Schnitt durch die Rücknahmepositionen 2f und 2b ohne Berücksichtigung der Profilkrümmung der vorgegebenen Zahnflankengeometrie.
Fig. 4C zeigt schematisch einen Schnitt durch die Rücknahmepositionen 2g und 2c ohne Berücksichtigung der Profilkrümmung der vorgegebenen Zahnflankengeometrie.
Fig. 5A zeigt schematisch einen Schnitt durch die Rücknahmepositionen 2h und 2d mit Berücksichtigung der Profilkrümmung der vorgegebenen Zahnflankengeometrie.
Fig. 5B zeigt schematisch einen Schnitt durch die Rücknahmepositionen 2f und 2b mit Berücksichtigung der Profilkrümmung der vorgegebenen Zahnflankengeometrie.
Fig. 6A zeigt schematisch eine Vorrichtung zum Erzeugen von Steuerdaten nach einem Ausführungsbeispiel der vorliegenden Erfindung.
Fig. 6B zeigt schematisch ein Eingabemittel der Vorrichtung aus Fig. 6A.
Fig. 7 zeigt eine beispielhafte graphische Oberfläche eines Darstellungsmittels einer Vorrichtung zum Erzeugen von Steuerdaten nach einem Ausführungsbeispiel der vorliegenden Erfindung

### Ausführliche Beschreibung bevorzugter

### Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

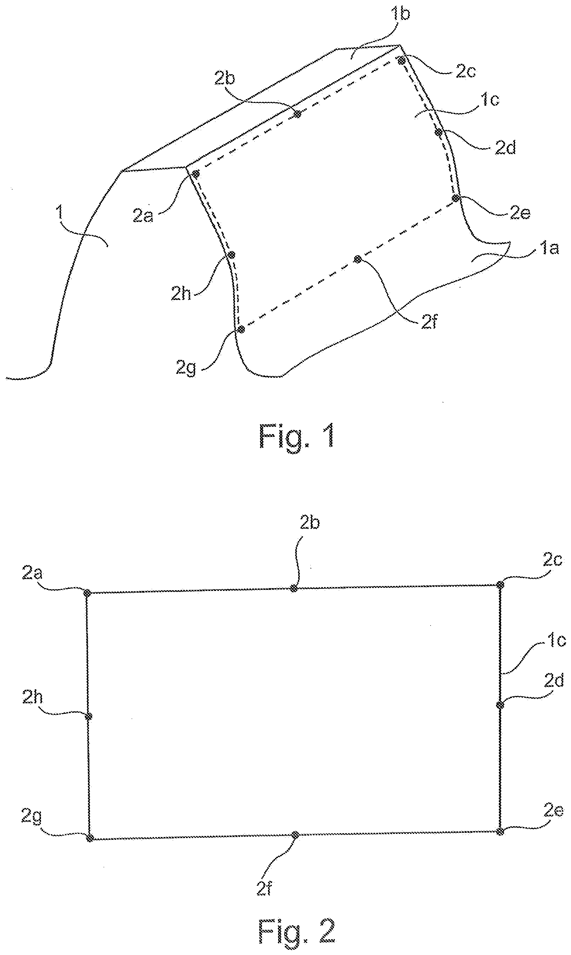

Fig. 1 zeigt schematisch eine beispielhafte Zahnflanke 1c eines Zahns 1 einer Verzahnung eines zu fertigenden Werkstücks, hier beispielhaft eine Geradverzahnung. Der Zahn 1 in Fig. 1 weist einen Zahnkopf 1b und einen Zahngrund 1a auf, wobei sich zwischen dem Zahnkopf 1b und dem Zahngrund 1a eine Zahnflanke 1c erstreckt, die durch die gestrichelte Linie gekennzeichnet ist und auf der bei dem Betrieb des die Verzahnung aufweisenden Werkstücks die Gegenflanke abrollt. Die Zahnflanke 1c wird oftmals auch als der verzahnungsaktive Bereich der Seite des Zahns 1 bezeichnet.

Die Zahnflanke 1c in Fig. 1 entspricht hierbei beispielhaft dem Bereich des Zahns 1, der ein exaktes Zahnflankenprofil entsprechend einer mathematisch vorgegebenen Zahnflankengeometrie aufweist. Dies bedeutet, dass eine Gegenflanke, die eine entsprechende mathematisch exakte Zahnflankengeometrie aufweist, beim lastfreien Abrollen mit der Zahnflanke 1c im Wesentlichen den gesamten Bereich der Zahnflanke 1c berührt bzw. mit dieser in Kontakt kommt (entsprechend einer Linie bzw. Kurve, die beim Abrollen über die Zahnflanke 1c bewegt wird von dem Zahngrund 1a zu dem Zahnkopf 1b oder von dem Zahnkopf 1b zu dem Zahngrund 1a, je nach Abrollrichtung). Die Zahnflanke 1c in Fig. 1 (gestrichelte Linie in Fig. 1) wird somit im Wesentlichen definiert durch das Tragbild beim Abrollen der mathematisch exakten Zahnflanke 1c mit einer mathematisch exakten Gegenflanke ohne Last, das heißt beim lastfreien Abrollen.

In den Bereichen des Zahnkopfes 1b und des Zahngrunds 1a kann die Form des Zahns von der vorgegebenen Zahnflankengeometrie bzw. von dem vorgegebenen Zahnflankenprofil abweichen, so dass dieser Bereich im Folgenden nicht zu der Zahnflanke 1c gezählt wird, da im Folgenden davon ausgegangen wird, dass die Zahnflanke 1c im Profil das verzahnungsaktive vorgegebene Zahnflankenprofil aufweist.

Es möglich, ein geometrisches Modell der Zahnflanke 1c zu berechnen, z.B. mittels eines CAD-Systems, insofern benötigte Verzahnungsinformationsdaten vorgegeben bzw. festgelegt werden. Hierzu können insbesondere die folgenden Daten benötigt werden, um ein mathematisches bzw. numerisches Modell der Zahnflanke 1c berechnen zu können:
- Daten, die eine Größe und Form des gesamten Werkstücks vor und/oder nach Bearbeitung (z.B. Daten zur Berechnung einer Rohteil- und/oder Fertigteilgeometrie bzw. eines Modells einer Rohteil- und/oder Fertigteilgeometrie) angeben,
- Daten, die eine Art der Bauform der Verzahnung angeben, also insbesondere z.B. eine Bauform aus den möglichen Bauformen Stirnrad, Kegelrad, Tellerrad, Zylinderrad, Zahnstange, oder andere,
- Daten, die eine Verzahnungsart angeben, insbesondere z.B. eine Verzahnungsform aus den möglichen Verzahnungsformen Geradverzahnung, Schrägverzahnung, Bogenverzahnung, Spiralverzahnung, oder andere,
- Daten, die eine Zahnflankenprofilform angeben, insbesondere z.B. eine Zahnflankenprofilform aus den Zahnflankenprofilformen Evolventenprofil, Zykloidprofil, und Kreisbogenprofil, oder andere,
- Daten, die eine Größe und/oder Form einer Zahngeometrie der Verzahnung angeben, insbesondere zum Beispiel Zahnhöhe, Zahnbreite, oder ähnliche Parameter, und/oder
- Daten, die eine Zahl der Zähne der Verzahnung angeben.

Des Weiteren kann es erforderlich sein, zum Beispiel bei Kegelrädern bzw. entsprechenden Ritzeln, anzugeben bzw. vorzugeben, ob das zu herzustellende Zahnrad links- bzw. rechtsdrehend ausgelegt sein soll, ob die Achsen des Kegelzahnrads und des Ritzels eine Achsverschiebung aufweisen sollen, und gegebenenfalls auch Daten, die Form, Größe und ggf. andere Beschaffenheiten des Gegenzahnrads beschreiben, anzugeben.

Aufgrund der vorstehend genannten Daten ist es dann auf einfache Weise möglich, ein mathematisch exaktes Modell eines eine Verzahnung aufweisenden Werkstücks zu berechnen, mit Zahnflanken bzw. einer Zahnflanke 1c, die einer exakten mathematischen Zahnflankengeometrie entspricht, die insbesondere im Profil genau die vorgegebene Zahnflankenprofilform aufweist, zum Beispiel eine Evolventenprofilform.

Ausgehend von einem derartigen berechneten Modell, zum Beispiel ein mittels eines CAD-Systems berechneten Modell, ist es weiterhin möglich, auf Grundlage des Modells Bahndaten zu berechnen, zum Beispiel zur Erzeugung eines NC-Programms z.B. mittels eines CAM- oder CAD/CAM-Systems, die in Steuerdaten umfasst sind, anhand derer ein Werkzeug, wie zum Beispiel ein Schaftfräser oder andere, an einer 5 Achsen aufweisenden, numerisch gesteuerten Werkzeugmaschine, zum Beispiel einer Fräsmaschine, einer Universalfräsmaschine oder einem Universalbearbeitungszentrum, gesteuert werden kann, um durch sukzessives, abzeilendes Verfahren des Fräswerkzeugs entlang der Bearbeitungsbahnen sukzessive bzw. in Zeilen die Zahnflanke 1c auf dem Werkstück herauszuarbeiten. Hierbei sei insbesondere auf die Lehre der DE 10 2009 008 124 verwiesen, in der beschrieben ist, wie derartige Bearbeitungsbahnen auf Grundlage einer vorgegebenen Zahnflankengeometrie bevorzugt erzeugt werden können.

Erfindungsgemäß ist es nun vorgesehen, die Steuerdaten jedoch nicht auf Grundlage eines Modells einer vorgegebenen Zahnflankengeometrie zu erzeugen, die eine mathematisch exakte Zahnflankenprofilform bzw. Zahnflankengeometrie aufweist, sondern vielmehr ist es erfindungsgemäß vorgesehen, vor bzw. während des Erzeugens der Steuerdaten das Modell der Zahnflankengeometrie bzw. die vorgegebene Zahnflankengeometrie zu verändern bzw. zu modifizieren, um vorteilhaft ein Tragbild auf der Zahnflanke noch vor der Erstbearbeitung des Werkstücks zu modellieren. Somit kann auf einfache und effiziente Weise ein bestimmtes gewünschtes Tragbildverhalten bei dem späteren Betrieb des die Verzahnung aufweisenden Werkstücks erreicht werden, ohne das Werkstück nach Bearbeitung an der Werkzeugmaschine zur Modellierung des Tragbilds nachbearbeiten zu müssen.

Das Modellieren des Tragbilds bzw. das Verändern der vorgegebenen Zahnflankengeometrie zum Modellieren eines Tragbilds wird im Folgenden unter Bezugnahme auf die Figuren 2 bis 5B gemäß einem beispielhaften Ausführungsbeispiel der vorliegenden Erfindung erläutert.

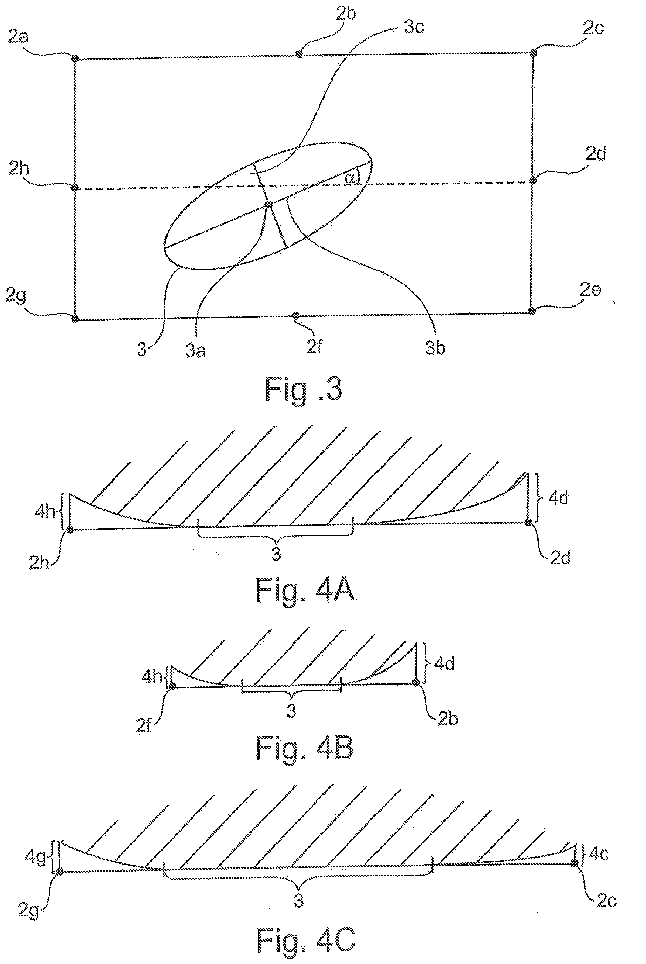

Fig. 2 zeigt eine abstrakte Darstellung der Zahnflanke 1c als einfaches Rechteck. Hierbei handelt es sich um eine vereinfachte abstrakte Darstellung bzw. modifizierte Darstellung, in der die Krümmung der Zahnflanke 1c entsprechend des vorgegebenen Zahnflankenprofils bzw. entsprechend der vorgegebenen Zahnflankengeometrie nicht berücksichtigt ist. So kann die erfindungsgemäße Modifikation bzw. Veränderung der Zahnflankengeometrie leichter dargestellt werden. Ein Rechteck ohne Krümmung, wie in Fig. 2 dargestellt, bedeutet hierbei also eine abstrakte Darstellung der Zahnflanke 1c, wobei in den Figuren 4A bis 4C gezeigte Krümmung der abstrakten Darstellung der Zahnflanke 1c einer zusätzlich zur Krümmung der vorgegebenen Zahnflankengeometrie existierenden Krümmung darzustellen.

Fig. 3 zeigt beispielhaft die abstrakte Darstellung der Zahnflanke 1c aus Fig. 2, wobei gemäß einem Ausführungsbeispiel der vorliegenden Erfindung auf der Zahnflanke 1c ein Tragbildbereich 3 und Rücknahmepositionen 2a bis 2h festgelegt sind.

Beispielhaft ist der festgelegte Tragbildbereich 3 in Fig. 3 als Ellipse bzw. ellipsenförmig festgelegt bzw. vorgegeben. Die vorliegende Erfindung ist jedoch nicht auf ellipsenförmige Tragbildbereiche eingeschränkt, sondern des Weiteren kann der Tragbildbereich in beliebiger Form festgelegt werden, zum Beispiel mit beliebiger Geometrie oder entsprechend einer geometrischen Grundform wie z.B. rechteckig, kreisförmig, trapezförmig oder entsprechend anderer geometrischer zweidimensionaler Grundformen.

Die Größe des Tragbildbereichs 3 wird beispielhaft durch die Hauptachsen 3d und 3c festgelegt bzw. vorgegeben und die Positionierung des festgelegten Tragbildbereichs 3 auf der Zahnflanke 1c wird hierbei beispielhaft durch den Schnittpunkt 3a der Hauptachsen 3d und 3c festgelegt bzw. vorgegeben.

Des Weiteren kann eine Ausrichtung des festgelegten Tragbildbereichs 3 gemäß diesem Ausführungsbeispiel durch den Winkel α festgelegt werden, der eine Ausrichtung der Hauptachse 3b des ellipsenförmigen festgelegten Tragbildbereichs 3 angibt.

Auf der Außenseite der Zahnflanke 1c sind Rücknahmepositionen 2a bis 2h festgelegt. Die Rücknahmepositionen 2a, 2c, 2e, und 2g sind hierbei beispielhaft an den Ecken der Zahnflanke 1c positioniert und die Rücknahmepositionen 2b, 2d, 2f, und 2h sind hier beispielhaft mittig zwischen zwei benachbarten Ecken der Zahnflanke 1c positioniert. Die Rücknahmepositionen 2a bis 2h bzw. auch deren Anzahl kann bereits programmtechnisch vorgegeben sein oder von einem Benutzer einer Vorrichtung zum Erzeugen von Steuerdaten gemäß der vorliegenden Erfindung festgelegt werden.

Erfindungsgemäß ist es vorgesehen, an den jeweiligen Rücknahmepositionen 2a bis 2h Rücknahmeparameter festzulegen, entsprechend derer die Zahnflankengeometrie im Vergleich zu der vorgegebenen Zahnflankengeometrie an den jeweiligen Rücknahmepositionen zurückgenommen werden soll.

Weiterhin ist es erfindungsgemäß vorgesehen, dass die Zahnflankengeometrie im Bereich des festgelegten Tragbildbereichs 3 nicht verändert bzw. nicht modifiziert wird. Das Vorgeben von Rücknahmeparametern an dem Rücknahmepositionen 2a bis 2h führt hierbei erfindungsgemäß somit nur zu einer Rücknahme der Zahnflankengeometrie im Bereich der Zahnflanke 1c, der außerhalb des auf der Zahnflanke 1c vorgegebenen bzw. festgelegten Tragbildbereichs 3 liegt. In anderen Worten kann im Inneren des festgelegten Tragbildbereichs 3 eine mathematisch exakte Zahnflankengeometrie entsprechend der vorgegebenen Zahnflankengeometrie beibehalten werden. Somit kann gewährleistet werden, dass trotz Rücknahme der Zahnflankengeometrie außerhalb des festgelegten Tragbildbereichs 3 beim lastfreien Abrollen der Zahnflanke 1c mit einer Gegenflanke zumindest ein Tragbild der Größe, Position und Gestalt entsteht, wie es dem festgelegten Tragbildbereich 3 entspricht.

Während beim lastfreien Abrollen der Zahnflanke 1c mit einer Gegenflanke vor der Veränderung der Zahnflankengeometrie ein Tragbild im Wesentlichen über den gesamten Bereich der Zahnflanke 1c entstehen würde, kann hierbei erfindungsgemäß bereits ein Tragbild beim lastfreien Abrollen der Flanken festgelegt bzw. vorgegeben werden, wobei Größe, Gestalt und/oder Form beliebig gewählt bzw. vorgegeben werden kann.

Zur Modellierung des Tragbilds unter Last ist es vorgesehen, die jeweiligen Rücknahmeparameter an den jeweiligen Rücknahmepositionen 2a bis 2h festzulegen, entsprechend derer die Zahnflanke bzw. die Zahnflankengeometrie außerhalb des vorgegebenen Tragbildbereichs 3 festgelegt wird.

Die Rücknahme der Zahnflankengeometrie ist im Folgenden unter Bezugnahme auf die Figuren 4A bis 4C beispielhaft illustriert. Fig. 4A zeigt beispielhaft einen Schnitt durch die Rücknahmepositionen 2h und 2d aus Fig. 3, wobei an den Rücknahmepositionen 2h und 2d die jeweiligen Rücknahmeparameter 4h und 4d festgelegt sind, die eine Rücknahme der Zahnflankengeometrie vorgeben. Im Inneren ist weiterhin der Bereich des festgelegten Tragbildbereichs 3 dargestellt, wobei in Figur 4A erkennbar ist, dass im Inneren des festgelegten Tragbildbereichs 3 die Zahnflankengeometrie nicht modifiziert wird, wobei nach außen hin zu den jeweiligen Rücknahmepositionen 2h bzw. 2b eine kontinuierliche Rücknahme der Zahnflankengeometrie durchgeführt wird, so dass an den Rücknahmepositionen 2h und 2d jeweils Rücknahmen der Zahnflankengeometrie entsprechend den vorgegebenen Rücknahmeparameter 4h und 4d erreicht werden können.

Die Figuren 4B und 4C zeigen analog die Rücknahme der Zahnflankengeometrie entlang der Schnitte zwischen den Rücknahmepositionen 2f und 2b (Fig. 4B) und den Rücknahmepositionen 2g und 2c (Fig. 4C), wobei entsprechende Rücknahmeparameter 4f, 4d, 4g und 4c festgelegt sind.

Wie in den Figuren 4A bis 4C erkennbar ist, ist nach diesem Ausführungsbeispiel der vorliegenden Erfindung die Rücknahme der Zahnflankengeometrie derart vorgenommen, dass die Übergänge insbesondere an den Schnittbereichen zu dem festgelegten Tragbildbereich 3 kontinuierlich bzw. tangential und insbesondere mit gleichmäßigen Übergängen durchgeführt sind. Die Rücknahme von dem inneren festgelegten Tragbildbereich 3 bis zu den festgelegten Rücknahmepositionen erfolgt ebenfalls gleichmäßig, insbesondere mit einer gleichmäßigen Krümmung.

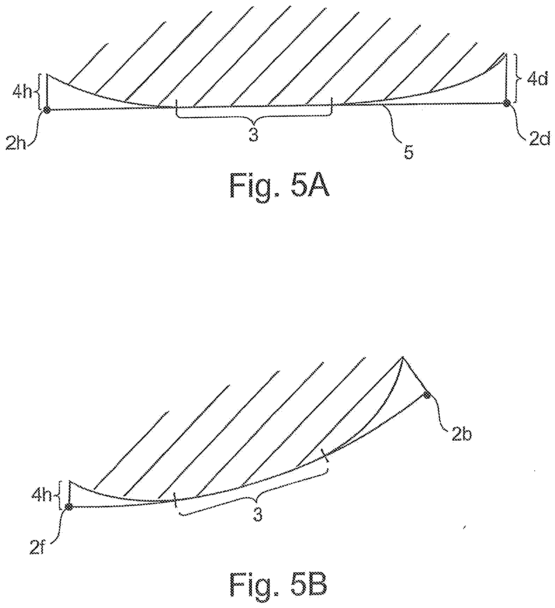

In den Figuren 3 bis 4C wurde, wie vorstehend bereits erwähnt, die Krümmung der bereits vorgegebenen mathematisch exakten Zahnflankengeometrie der Zahnflanke 1c zur vereinfachten Darstellung vernachlässigt bzw. nicht dargestellt. In den folgenden Figuren 5A und 5B ist hierbei gezeigt, wie die Modellierung des Tragbilds vor Erzeugen der Steuerdaten gemäß einem Ausführungsbeispiel der vorliegenden Erfindung unter Bezugnahme auf die tatsächliche Zahnflankengeometrie mit Berücksichtigung der Profilkrümmung beschaffen ist.

Fig. 5A zeigt einen Schnitt durch die Rücknahmepositionen 2h und 2d auf der Zahnflanke 1c, wobei hierbei das Bezugszeichen 5 die vorgegebene Zahnflankengeometrie bezeichnet und das Bezugszeichen 6 die veränderte Zahnflankengeometrie nach Festlegen des Tragbildbereichs 3 und Festlegen der Rücknahmeparameter 4h und 4d an den festgelegten Rücknahmepositionen 2h und 2d. Da es sich im vorliegenden Beispiel um eine Geradverzahnung handelt, und die Rücknahmepositionen 2h und 2d auf gleicher Höhe des Zahns (im Wesentlichen auf Höhe des Teilkreises) festgelegt sind, ist die Schnittlinie durch die vorgegebene Zahnflankengeometrie 5 in Fig. 5A geradlinig.

Die veränderte Zahnflankengeometrie weist jedoch an den Rücknahmepositionen 2h und 2d eine Rücknahme entsprechend der vorgegebenen Rücknahmeparameter 4h und 4d auf, wobei die Rücknahme bei vorzugsweise gleichmäßiger Krümmung hin zu dem im Inneren festgelegten Tragbildbereich 3 abnimmt und gleichmäßig in den Tragbildbereich 3 übergeht, insbesondere bevorzugt tangential. Erfindungsgemäß ist die Zahnflankengeometrie im Bereich des festgelegten Tragbilds 3 gegenüber dem Verlauf der vorgegebenen Zahnflankengeometrie 5 nicht modifiziert.

Fig. 5B zeigt demgegenüber einen Schnitt entlang der Zahnprofilform zwischen den Rücknahmepositionen 2b und 2f, wobei die Profilform hierbei beispielhaft einer Evolventenprofilform entspricht. Das bedeutet, dass die Schnittlinie der vorgegebenen Zahnflankengeometrie 5 in Fig. 5B in diesem Beispiel einer Evolventenprofilform folgt. An den Rücknahmepositionen 2b und 2f sind wiederum entsprechend der vorgegebenen Rücknahmeparameter 4b und 4f Veränderungen an der Zahnflankengeometrie vorgenommen, so dass eine veränderte Zahnflankengeometrie 6 erhalten wird. Wiederum ist im Bereich des festgelegten Tragbildbereichs 3 die Zahnflankengeometrie 6 im Vergleich zu der vorgegebenen Zahnflankengeometrie 5 nicht modifiziert, wobei die veränderte Zahnflankengeometrie 6 an der Außenkante des festgelegten Tragbildbereichs 3 einen gleichmäßigen, insbesondere tangentialen Übergang aufweist.

Nun kann auf Grundlage der veränderten Zahnflankengeometrie ein Modell der veränderten Zahnflankengeometrie erzeugt werden, bzw. ein Modell des die Verzahnung aufweisenden Werkstücks mit der veränderten Zahnflankengeometrie. Aufgrund dieses Modells können dann wie bereits aus der DE 10 2009 008 124 bekannt, Steuerdaten erzeugt werden, anhand derer das Werkstück bzw. die Zahnflanke 1c gefertigt wird, indem ein Fräswerkzeug, wie zum Beispiel ein Schaftfräser der Werkzeugmaschine durch abzeilendes Bearbeiten beim Abfahren von Bearbeitungsbahnen entsprechend der Steuerdaten sukzessive abzeilend die Zahnflanke bzw. das die Zahnflanke aufweisende Werkstück fräst.

Das bei dieser fräsenden Bearbeitung entstehende Werkstück weist dann bereits nach der Herstellung Zahnflanken entsprechend der veränderten Zahnflankengeometrie auf, so dass das Tragbild bereits vor Erzeugen der Steuerdaten und vor der Bearbeitung bzw. Herstellung modellier ist und eine spätere Nachbearbeitung zum Beispiel durch läppendes oder schleifendes Bearbeiten nicht erforderlich ist.

Insbesondere können die Rücknahmeparameter und der festgelegte Tragbildbereich 3 derart festgelegt werden, dass das Tragbild bei einer bestimmten Last beim Abrollen mit der Gegenflanke ein gewünschtes Tragbild aufweist, insbesondere bei gewünschter Größe, Lage und Form. Die vorliegende Erfindung macht es somit auf einfache und effiziente Weise möglich, ohne einer erforderliche Nachbearbeitung des Werkstücks, bereits vor Erzeugen der Steuerdaten ein Tragbild auf der Zahnflanke zu modellieren, derart dass beim lastfreien Abrollen mit der Gegenflanke und/oder beim Abrollen der Zahnflanke mit einer Gegenflanke unter Last, zum Beispiel bei einem bestimmten Lastwert ein gewünschtes Tragbild erhalten werden kann.

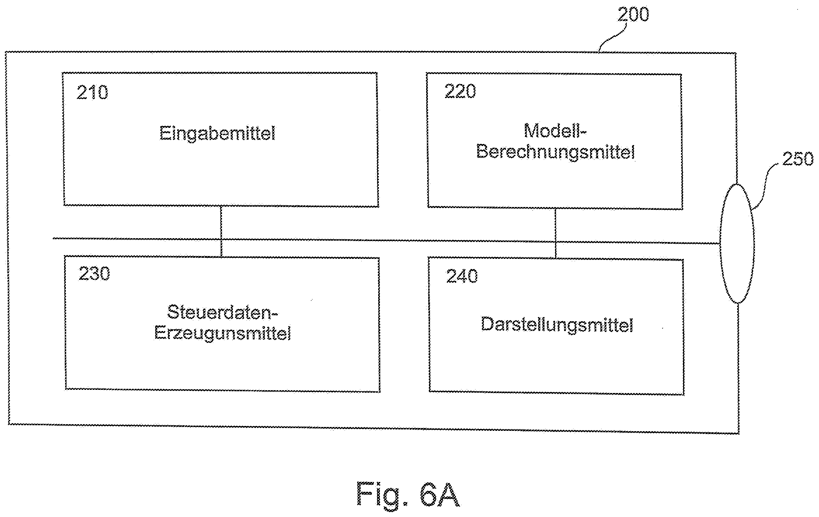

Fig. 6A zeigt schematisch eine Vorrichtung 200 zum Erzeugen von Steuerdaten zur Fertigung eines eine Verzahnung aufweisenden Werkstücks bzw. zum Erzeugen von Steuerdaten nach einem Ausführungsbeispiel der vorliegenden Erfindung. Die Vorrichtung 200 ist geeignet zum Erzeugen von Steuerdaten zur Ausbildung einer Zahnflanke durch fräsende Bearbeitung eines Werkstücks an einer zumindest 5 Achsen umfassenden, numerisch gesteuerten Werkzeugmaschine, insbesondere an einer Fräsmaschine, an einer Universalfräsmaschine oder an einem Bearbeitungszentrum, durch sukzessives Abfahren von Bearbeitungsbahnen mit einem Fräswerkzeug der Werkzeugmaschine auf Grundlage der erzeugten Steuerdaten. Die Vorrichtung kann Teil der Werkzeugmaschine sein, d.h. in der Werkzeugmaschine umfasst sein oder zumindest fest mit dieser verbunden sein, oder auch separat von der Werkzeugmaschine bereitgestellt werden. Die Vorrichtung kann durch ein oder mehrere Datenverarbeitungsmittel, wie z.B. durch einen oder mehrere Computer bzw. computerähnliche Datenverarbeitungsmittel, gebildet sein.

Die Vorrichtung 200 umfasst ein Eingabemittel 210 zum Eingeben von Eingaben, Daten, Parametern, Informationen oder dergleichen, insbesondere zum Vorgeben von Verzahnungsinformationsdaten und ein Modellberechnungsmittel 220 zum Berechnen eines Modells des Werkstücks auf Grundlage der vorgegebenen Verzahnungsinformationsdaten, insbesondere zum Berechnen eines Modells einer vorgegebenen Zahnflankengeometrie auf Grundlage der vorgegebenen Verzahnungsinformationsdaten. Weiterhin umfasst die Vorrichtung 200 ein Steuerdatenerzeugungsmittel 230 zum Erzeugen von Steuerdaten zur Fertigung des Werkstücks, insbesondere zum Erzeugen von Steuerdaten zur Ausbildung einer Zahnflanke der Verzahnung auf dem Werkstück an der numerisch anhand der Steuerdaten gesteuerten Werkzeugmaschine.

Weiterhin umfasst die Vorrichtung 200 gemäß dieses beispielhaften Ausführungsbeispiels ein Darstellungsmittel 240 zum Darstellen eines Modells der veränderten Zahnflankengeometrie, zum Darstellen eines Modells der vorgegebenen Zahnflankengeometrie, zum Darstellen einer Rohteilgeometrie des Werkstücks, die eine Geometrie eines Rohteils des Werkstücks vor dem Herausarbeiten der Verzahnung angibt, und zum Darstellen einer Fertigteilgeometrie des Werkstücks, die eine Geometrie eines Fertigteils des Werkstücks nach dem Herausarbeiten der Verzahnung angibt.

Weiterhin umfasst die Vorrichtung 200 ein Schnittstellenmittel 250, mittels dessen die Vorrichtung z.B. zum Übertragen der Steuerdaten an die Werkzeugmaschine bzw. an die Werkzeugmaschinensteuerungseinrichtung der Werkzeugmaschine der angeschlossen bzw. verbunden werden kann, z.B. per Kabelverbindung oder auch durch eine kabellose Verbindung wie z.B. WLAN. Das Schnittstellenmittel kann auch dazu geeignet sein, von der Vorrichtung 200 erzeugte Steuerdaten auf einem Speichermedium zu speichern, z.B. auf einem USB-Speicherstick oder einer Flash-Memory-Speicherkarte oder anderen Speichermedien, wobei das Speichermedium danach zur Übertragung der Steuerdaten an die Werkzeugmaschine mit der Werkzeugmaschine verbunden werden kann.

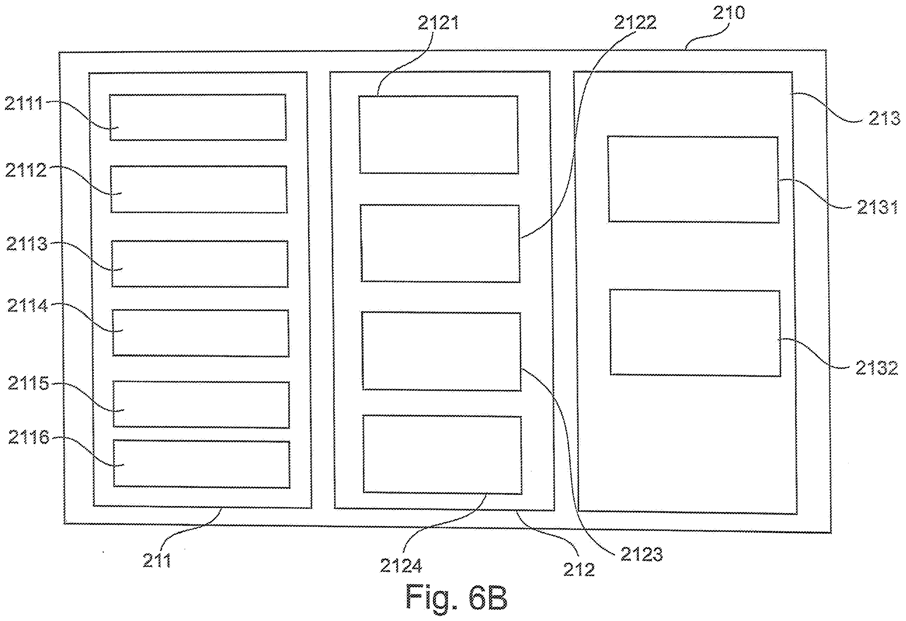

Fig. 6B zeigt schematisch eine beispielhafte Ausführungsform des Eingabemittels 210 der Vorrichtung 200 aus Fig. 6A. Das Eingabemittel 210 umfasst ein erstes Eingabemittel 211 zum Festlegen bzw. Vorgeben einer Zahnflankengeometrie, ein zweites Eingabemittel 212 zum Festlegen bzw. Vorgeben eines Tragbildbereichs auf der vorgegebenen Zahnflankengeometrie und ein drittes Eingabemittel 213 zum Vorgeben bzw. Festlegen von Parametern zur Veränderung der vorgegebenen Zahnflankengeometrie.

Das erste Eingabemittel 211 zum Festlegen bzw. Vorgeben einer Zahnflankengeometrie bzw. zum Festlegen einer gesamten Werkstückgeometrie umfasst ein Eingabemittel 2111 zum Vorgeben von Daten, die eine Größe und Form bzw. Geometrie des Werksstücks angeben, ein Eingabemittel 2112 zum Vorgeben von Daten, die eine Art der Bauform der Verzahnung angeben, insbesondere eine Bauform aus den Bauformen Stirnrad, Kegelrad, Tellerrad, Zylinderrad und Zahnstange, ein Eingabemittel 2113 zum Vorgeben von Daten, die eine Verzahnungsform angeben, insbesondere eine Verzahnungsform aus den Verzahnungsformen Geradverzahnung, Schrägverzahnung, Bogenverzahnung, Spiralverzahnung, ein Eingabemittel 2114 zum Vorgeben von Daten, die eine Zahnflankenprofilform angeben, insbesondere eine Zahnflankenprofilform aus den Zahnflankenprofilformen Evolventenprofil, Zykloidprofil, und Kreisbogenprofil, ein Eingabemittel 2115 zum Vorgeben von Daten, die eine Größe und Form einer Zahngeometrie der Verzahnung angeben und ein Eingabemittel 2116 zum Vorgeben von Daten, die eine Zahl der Zähne der Verzahnung angeben.

Das zweite Eingabemittel 212 zum Festlegen des Tragbildbereichs umfasst ein Eingabemittel 2121 zum Festlegen einer Form des Tragbildbereichs, ein Eingabemittel 2122 zum Festlegen einer Position des Tragbildbereichs auf der Zahnflanke, ein Eingabemittel 2123 zum Festlegen einer Größe des Tragbildbereichs und ein Eingabemittel 2124 zum Festlegen einer Ausrichtung des Tragbildbereichs auf der Zahnflanke. Das dritte Eingabemittel 213 um Vorgeben bzw. Festlegen von Parametern zur Veränderung der vorgegebenen Zahnflankengeometrie umfasst ein Eingabemittel 2131 zum Festlegen bzw. Vorgeben zumindest eines jeweiligen Rücknahmeparameters an zumindest einer festgelegten Rücknahmeposition auf der vorgegebenen Zahnflankengeometrie und ein Eingabemittel 2132 zum Vorgeben bzw. Festlegen einer oder mehrerer Rücknahmepositionen auf der vorgegebenen Zahnflankengeometrie.

Auf Grundlage der an dem Eingabemittel 210 eingegebenen bzw. vorgegebenen Verzahnungsinformationen kann das Modellberechnungsmittel 220 ein Modell des Werkstücks mit Verzahnung und insbesondere ein Modell der vorgegebenen bzw. veränderten Zahnflankengeometrie bzw. Zahnflankengeometrien berechnen. Auf Grundlage des berechneten Modells berechnet das Steuerdatenerzeugungsmittel 230 Bahndaten für ein Fräswerkzeug zum sukzessiven bzw. abzeilenden, fräsenden Herausarbeiten der Zahnflanke entsprechend der veränderten Zahnflankengeometrie. Auf Grundlage der berechneten Bahndaten ist es möglich die Steuerdaten, z.B. in der Form eines NC-Programs, numerisch bzw. automatisch zu erzeugen.

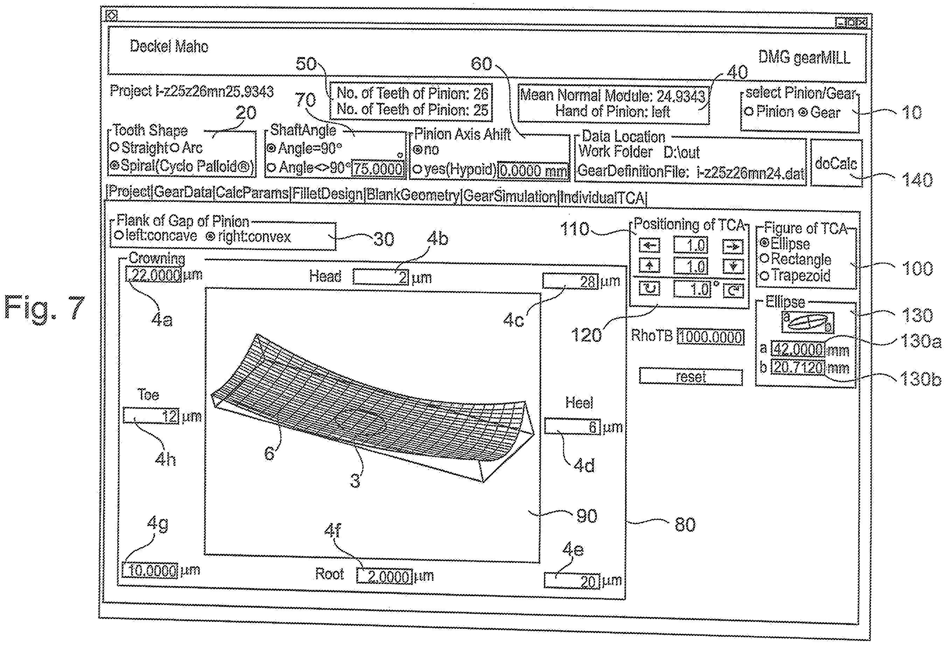

Fig. 7 zeigt eine beispielhafte graphische, insbesondere interaktive Oberfläche eines Darstellungsmittels 210 einer Vorrichtung 200 zum Erzeugen von Steuerdaten nach einem Ausführungsbeispiel der vorliegenden Erfindung. Beispielhaft ist in Fig. 7 bereits vorfestgelegt, dass das Werkstück ein Kegelrad ist, d.h. als Bauform wurde die Bauform Kegelrad vorfestgelegt. In einem Eingabe- und Anzeigebereich 10 kann ein Benutzer auswählen bzw. vorgeben, ob Verzahnungsinformationsdaten für ein Kegelrad oder für ein zu einem bereits zuvor festgelegten bzw. vorgegebenen Kegelrad gehörendes Ritzel vorgegeben bzw. festgelegt werden sollen. In einem Eingabe- und Anzeigebereich 20 kann der Benutzer auswählen bzw. vorgeben, ob das zu fertigende Kegelrad eine Geradverzahnung, Spiralverzahnung oder Spiralverzahnung aufweisen soll, d.h. es kann eine Verzahnungsform des Kegelrads gewählt werden. In einem Eingabe- und Anzeigebereich 30 kann der Benutzer auswählen bzw. vorgeben, ob das zu fertigende Kegelrad für ein Ritzel mit links konkaver oder rechts konvexer Zahnlückenflanke ausgebildet werden soll. In einem Anzeigebereich 40 wird die Händigkeit des Ritzels angezeigt. In einem Anzeigebereich 50 wird die zuvor festgelegte Anzahl der Zähne des Kegelrads angezeigt. In einem Eingabe- und Anzeigebereich 60 kann der Benutzer auswählen bzw. vorgeben, ob die Achse des zu fertigenden Kegelrads bei Betrieb relativ zu der Achse des Ritzels verschoben sein soll. Wenn eine Achsverschiebung vorgesehen werden soll, kann zusätzlich der Betrag der Achsverschiebung (z.B. in der Einheit mm) in dem Eingabe- und Anzeigebereich 60 eingegeben bzw. vorgegeben werden. In einem Eingabe- und Anzeigebereich 70 kann der Benutzer auswählen bzw. vorgeben, ob die beiden Achsen des Kegelrads und des Ritzels einen rechteckigen Winkel ausbilden sollen, und falls ein von 90° abweichender Winkel vorgesehen ist, kann der Betrag des Winkels eingeben bzw. vorgegeben werden.

In einem Eingabe- und Anzeigebereich 80 kann der Benutzer die Rücknahmeparameter 4a bis 4h (z.B. in der Einheit µm) vorgeben bzw. festlegen. Die Rücknahmepositionen 2a bis 2h sind gemäß dieses Ausführungsbeispiels bereits entsprechend der in Fig. 2 dargestellten Positionen auf der Zahnflanke 1c fest vorgegeben. Die entsprechend des vorgegebenen Tragbildbereichs 3 und der vorgegebenen Rücknahmeparameter 4a bis 4h modifizierte bzw. veränderte Zahnflankengeometrie 6 wird in einem Anzeigebereich 90 in einer perspektivischen Darstellung dargestellt werden (in abstrakter Weise analog zu den Figs. 4A bis 4C, d.h. ohne Darstellung der Krümmung der vorgegebenen Zahnflankengeometrie). Der auf der Zahnflanke festgelegte Tragbildbereich 3 wird ebenfalls dargestellt. Die perspektivische Darstellung der modifizierten bzw. veränderten Zahnflankengeometrie 6 kann gedreht werden, um die modifizierte bzw. veränderte Zahnflankengeometrie 6 aus verschiedenen Blickrichtungen optisch überprüfen zu können.

Zum Festlegen bzw. Vorgeben des Tragbildbereichs 3 auf der Zahnflanke kann der Benutzer in einem Eingabe- und Anzeigebereich 100 aus verschiedenen Grundformen auswählen, um die Form des Tragbildbereichs 3 vorzugeben. Beispielhaft kann der Benutzer in Fig. 7 aus den Grundformen Ellipse, Rechteck und Trapez wählen. In einem Eingabe- und Anzeigebereich 110 kann der Benutzer die vertikale und horizontale Positionierung des Tragbildbereichs 3 auf der Zahnflanke vorgeben bzw. festlegen. Die Ausrichtung des festgelegten Tragbildbereichs 3 kann in einem Eingabe- und Anzeigebereich 120 vorgegeben werden (z.B. als Winkelausrichtung relativ zu der horizontalen Mittellinie der Zahnflanke). In einem Eingabe- und Anzeigebereich 130 kann der Benutzer schließlich die Größe des Tragbildbereichs vorgeben. Da in Fig. 7 in dem Eingabe- und Anzeigebereich 100 beispielhaft eine elliptische Form für den Tragbildbereich 3 vorgegeben ist, kann der Benutzer die Größe des Tragbildbereichs 3 durch die Vorgabe der Längen der Halbachsen a und b der Ellipse jeweils in den Eingabebereichen 130a und 130b vorgeben.

Nachdem die Verzahnungsinformationsdaten festgelegt bzw. vorgegeben sind, kann der Benutzer durch Betätigen des Eingabebereichs 140 die Berechnung des Modells der geänderten Zahnflankengeometrie bzw. das Erzeugen der Steuerdaten auf Grundlage der eingegebenen Informationen, einschließlich des Festlegens des Tragbildbereichs und des Festlegens der Parameter zum Verändern der Zahnflankengeometrie, starten.

Zusammenfassend wird durch die vorliegende Erfindung die Bearbeitung bzw. das Herstellen von eine Verzahnung aufweisenden Werkstücken verbessert und weiter vereinfacht und außerdem wird es ermöglicht, die Möglichkeiten der fräsenden Bearbeitung eines Werkstücks an einer numerisch gesteuerten, zumindest 5 Achsen umfassenden Werkzeugmaschine, insbesondere Universal-Werkzeugmaschine wie zum Beispiel einer Fräsmaschine, einer Universalfräsmaschine, oder einem Bearbeitungszentrum, zu erweitern. Insbesondere ermöglicht es die vorliegende Erfindung, ein Verfahren und eine Vorrichtung zum Erzeugen von Steuerdaten bereitzustellen, die die Möglichkeiten der neu entwickelten Verfahren zum Herstellen eines eine Verzahnung aufweisenden Werkstücks an einer Werkzeugmaschine, insbesondere Universal-Werkzeugmaschine, durch sukzessives bzw. abzeilendes Fräsen einer Zahnflanke auf dem Werkstück mittels eines Fräswerkzeugs, wie z.B. eines Schaftfräsers oder ähnlicher Fräswerkzeuge, auf der Grundlage von erzeugten Steuerdaten signifikant zu erweitern. Schließlich ermöglicht es die vorliegende Erfindung, ein eine Verzahnung aufweisendes Werkstück derart herzustellen, dass die zumindest eine Zahnflanke des Werkstücks auf einfache und effiziente Weise mit einem gewünschten Tragbild hergestellt werden kann, insbesondere ohne eine erforderliche Nachbearbeitung.

## Patentansprüche

1. Verfahren zum Erzeugen von Steuerdaten zur Ausbildung einer Zahnflanke durch fräsende Bearbeitung eines Werkstücks an einer zumindest 5 Achsen umfassenden, numerisch gesteuerten Werkzeugmaschine, insbesondere an einer Universal-Werkzeugmaschine, durch sukzessives Abfahren von Bearbeitungsbahnen mit einem Fräswerkzeug der Werkzeugmaschine auf Grundlage der erzeugten Steuerdaten, mit den Schritten:
- Vorgeben einer Zahnflankengeometrie (5),
- Festlegen eines Tragbildbereichs (3) auf der vorgegebenen Zahnflankengeometrie (5),
- Festlegen von Parametern (2a bis 2h, 4a bis 4h) zur Veränderung der vorgegebenen Zahnflankengeometrie (5), und
- Erzeugen von Steuerdaten auf Grundlage einer in Abhängigkeit des festgelegten Tragbildbereichs (3) und der festgelegten Parameter (2a bis 2h, 4a bis 4h) veränderten Zahnflankengeometrie (6),
**dadurch gekennzeichnet,**
**dass** das Festlegen von Parametern zur Veränderung der vorgegebenen Zahnflankengeometrie (5) ein Festlegen zumindest eines jeweiligen Rücknahmeparameters (4a bis 4h) an zumindest einer festgelegten Rücknahmeposition (2a bis 2h) auf der vorgegebenen Zahnflankengeometrie umfasst.

2. Verfahren nach Anspruch 1, **dadurch gekennzeichnet, dass** der Schritt Erzeugen von Steuerdaten die Berechnung eines Modells der geänderten Zahnflankengeometrie (6) auf Grundlage der vorgegebenen Zahnflankengeometrie (5), des festgelegten Tragbildbereichs (3) und der festgelegten Parameter (2a bis 2h, 4a bis 4h) umfasst.

3. Verfahren nach Anspruch 1 oder 2, wobei die geänderte Zahnflankengeometrie (6) nur außerhalb des festgelegten Tragbildbereichs (3) von der vorgegebenen Zahnflankengeometrie (5) abweicht.

4. Verfahren nach zumindest einem der vorhergehenden Ansprüche, **dadurch gekennzeichnet, dass**
die vorgegebene Zahnflankengeometrie (5) einer Zahnflankengeometrie mit maximalem Tragbild über die Zahnflanke (1c) beim lastfreien Abrollen der Zahnflanke (1c) mit einer Gegenflanke entspricht und/oder
der festgelegte Tragbildbereich (3) nach Veränderung der Zahnflankengeometrie ein Tragbild beim lastfreien Abrollen der Zahnflanke (1c) mit einer Gegenflanke beschreibt, insbesondere derart, dass die geänderte Zahnflankengeometrie (6) einer Zahnflankengeometrie einer Zahnflanke (1c) entspricht, die beim lastfreien Abrollen mit einer Gegenflanke ein dem festgelegten Tragbildbereich (3) entsprechendes Tragbild aufweist.

5. Verfahren nach zumindest einem der vorhergehenden Ansprüche, **dadurch gekennzeichnet, dass**
der Tragbildbereich (3) derart festgelegt wird, dass beim lastfreien Abrollen der Zahnflanke (1c) mit einer Gegenflanke ein Tragbild mit gewünschter Größe, Gestalt und Lage resultiert und/oder
die Parameter zur Veränderung der vorgegebenen Zahnflankengeometrie (5) derart festgelegt werden, dass beim Abrollen der Zahnflanke (1c) mit einer Gegenflanke unter Last ein Tragbild mit gewünschter Größe, Gestalt und Lage resultiert.

6. Verfahren nach Anspruch 5, **dadurch gekennzeichnet, dass** das Festlegen des Tragbildbereichs umfasst:
- Festlegen einer Form des Tragbildbereichs,
- Festlegen einer Position des Tragbildbereichs auf der Zahnflanke,
- Festlegen einer Größe des Tragbildbereichs, und/oder
- Festlegen einer Ausrichtung des Tragbildbereichs auf der Zahnflanke,
wobei die Form des Tragbildbereichs (3) insbesondre als kreisförmig, ellipsenförmig, rechteckig, quadratisch oder trapezförmig festgelegt wird.

7. Verfahren nach zumindest einem der vorhergehenden Ansprüche, **dadurch gekennzeichnet, dass** die veränderte Zahnflankengeometrie (6) im Vergleich zu der vorgegebenen Zahnflankengeometrie (5) an jeder der zumindest einen festgelegten Rücknahmepositionen (2a bis 2h) entsprechend des jeweiligen festgelegten Rücknahmeparameters (4a bis 4h) zurückgenommen ist.

8. Verfahren nach zumindest einem der vorhergehenden Ansprüche, **dadurch gekennzeichnet, dass**
zumindest eine Rücknahmeposition (2a bis 2h) auf einer Außenseite der vorgegebenen Zahnflankengeometrie (5) positioniert ist,
zumindest eine Rücknahmeposition (2a; 2c; 2e; 2g) an einer Ecke der vorgegebenen Zahnflankengeometrie (5) positioniert ist, und/oder
zumindest eine Rücknahmeposition (2b; 2d; 2f; 2h) zwischen zwei benachbarten Ecken der vorgegebenen Zahnflankengeometrie (5) positioniert ist.

9. Verfahren nach zumindest einem der vorhergehenden Ansprüche, **dadurch gekennzeichnet, dass** zumindest acht Rücknahmepositionen (2a bis 2h) derart festgelegt werden, dass vier Rücknahmepositionen (2a, 2c, 2e, 2g) jeweils an einer Ecke der vorgegebenen Zahnflankengeometrie (5) positioniert sind, und jeweils eine Rücknahmeposition (2b; 2d; 2f; 2h) zwischen zwei benachbarten Ecken der vorgegebenen Zahnflankengeometrie (5) positioniert ist.

10. Verfahren nach zumindest einem der vorhergehenden Ansprüche, **dadurch gekennzeichnet, dass** der Schritt Vorgeben einer Zahnflankengeometrie umfasst:
- Vorgegebenen von Verzahnungsinformationsdaten und
- Berechnen der vorgegebenen Zahnflankengeometrie auf Grundlage der vorgegebenen Verzahnungsinformationsdaten,
wobei die Verzahnungsinformationsdaten umfassen:
- Daten, die eine Größe und Form des Werksstücks angeben,
- Daten, die eine Art der Bauform der Verzahnung angeben, insbesondere eine Bauform aus den Bauformen Stirnrad, Kegelrad, Tellerrad, Zylinderrad und Zahnstange,
- Daten, die eine Verzahnungsform angeben, insbesondere eine Verzahnungsform aus den Verzahnungsformen Geradverzahnung, Schrägverzahnung, Bogenverzahnung, Spiralverzahnung,
- Daten, die eine Zahnflankenprofilform angeben, insbesondere eine Zahnflankenprofilform aus den Zahnflankenprofilformen Evolventenprofil, Zykloidprofil, und Kreisbogenprofil,
- Daten, die eine Größe und Form einer Zahngeometrie der Verzahnung angeben,und/oder
- Daten, die eine Zahl der Zähne der Verzahnung angeben.

11. Verfahren zum Erzeugen von Steuerdaten zur Fertigung eines eine Verzahnung aufweisenden Werkstücks, mit den Schritten:
- Vorgeben von Verzahnungsinformationsdaten,
- Berechnen eines Modells des Werkstücks auf Grundlage der vorgegebenen Verzahnungsinformationsdaten, umfassend den Schritt Berechnen einer vorgegebenen Zahnflankengeometrie auf Grundlage der vorgegebenen Verzahnungsinformationsdaten, und
- Erzeugen von Steuerdaten zur Fertigung des Werkstücks, umfassend den Schritt Erzeugen von Steuerdaten zur Ausbildung einer Zahnflanke der Verzahnung auf dem Werkstück gemäß einem Verfahren nach zumindest einem der vorhergehenden Ansprüche.

12. Vorrichtung, die dazu eingerichtet ist, Steuerdaten zur Ausbildung einer Zahnflanke durch fräsende Bearbeitung eines Werkstücks an einer zumindest 5 Achsen umfassenden, numerisch gesteuerten Werkzeugmaschine, insbesondere an einer Universal-Werkzeugmaschine, durch sukzessives Abfahren von Bearbeitungsbahnen mit einem Fräswerkzeug der Werkzeugmaschine auf Grundlage der Steuerdaten gemäß einem Verfahren nach zumindest einem der Ansprüche 1 bis 11 zu erzeugen, mit:
- einem ersten Eingabemittel zum Vorgeben einer Zahnflankengeometrie,
- einem zweiten Eingabemittel zum Festlegen eines Tragbildbereichs auf der vorgegebenen Zahnflankengeometrie,
- einem dritten Eingabemittel zum Festlegen von Parametern zur Veränderung der vorgegebenen Zahnflankengeometrie und
- einem Steuerdatenerzeugungsmittel zum Erzeugen von Steuerdaten auf Grundlage einer in Abhängigkeit des festgelegten Tragbildbereichs und der festgelegten Parameter veränderten Zahnflankengeometrie.

13. Vorrichtung zum Erzeugen von Steuerdaten zur Fertigung eines eine Verzahnung aufweisenden Werkstücks, mit:
- einem Eingabemittel (210) zum Vorgeben von Verzahnungsinformationsdaten,
- einem Modellberechnungsmittel zum Berechnen eines Modells des Werkstücks auf Grundlage der vorgegebenen Verzahnungsinformationsdaten, umfassend Berechnen einer vorgegebenen Zahnflankengeometrie auf Grundlage der vorgegebenen Verzahnungsinformationsdaten, und
- einer Vorrichtung gemäß Anspruch 12.

14. Numerisch gesteuerte, zumindest 5 Achsen umfassende Werkzeugmaschine, insbesondere Universal-Werkzeugmaschine, zum fräsenden Bearbeiten eines Werkstücks durch sukzessives Abfahren von Bearbeitungsbahnen mit einem Fräswerkzeug der Werkzeugmaschine auf Grundlage von erzeugten Steuerdaten, umfassend eine Vorrichtung zum Erzeugen von Steuerdaten gemäß Anspruch 12 oder 13.

15. Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, derart, dass an der Datenverarbeitungseinrichtung ein Verfahren gemäß einem der Ansprüche 1 bis 11 ausführbar ist.

## Claims

1. A method for generating control data for the formation of a tooth flank by milling a workpiece on a numerically controlled machine tool with at least 5 axes, particularly at a universal machine tool, by gradually moving along at processing paths with a milling tool of the machine tool based on the generated control data, the method comprising:
- providing a tooth flank geometry (5),
- determining a contact pattern area (3) on the provided tooth flank geometry (5),
- determining parameters (2a to 2h, 4a to 4h) to vary the provided tooth flank geometry (5), and
- generating control data on the basis of a tooth flank geometry (6) modified based on the determined contact pattern area (3) and of the determined parameters (2a to 2h, 4a to 4h),
**characterized in that**
the determining of the parameters to vary the provided tooth flank geometry (5) comprises determining at least one specific reduction parameter (4a to 4h) on at least one determined reduction position (2a to 2h) on the provided tooth flank geometry.

2. The method according to claim 1, **characterized in that** the generating of the control data comprises calculating a model of the modified tooth flank geometry (6) based on the provided tooth flank geometry (5), of the determined contact pattern area (3) and of the determined parameters (2a to 2h, 4a to 4h).

3. The method according to claim 1 or 2, wherein the modified tooth flank geometry (6) differs from the provided tooth flank geometry (5) only outside of the determined contact pattern area (3).

4. The method according to at least one of the preceding claims, **characterized in that**
the provided tooth flank geometry (5) corresponds to tooth flank geometry with a maximum contact pattern across the tooth flank (1c) during load-free rolling of the tooth flank (1c) with a mating flank, and/or
the determined contact pattern area (3) after modifying the tooth flank geometry defines a contact pattern during load-free rolling of the tooth flank (1c) with a mating flank, such that the modified tooth flank geometry (6) corresponds to the tooth flank geometry of the tooth flank (1c) which has a contact pattern corresponding to the determined contact pattern area (3) during load-free rolling with the mating flank.

5. The method according to at least one of the preceding claims, **characterized in that**
the contact pattern area (3) is determined in such a way that a contact pattern with a desired size, structure and position results from the load-free rolling of the tooth flank (1c) with a mating flank, and/or
the parameters to vary the provided tooth flank geometry (5) are determined in such a way that a contact pattern with a desired size, structure and position results from rolling of the tooth flank (1c) with a mating flank under load.

6. The method according to claim 5, **characterized in that** the determining of the contact pattern area comprises:
- determining a shape of the contact pattern area,
- determining a position of the contact pattern area on the tooth flank,
- determining a size of the contact pattern area, and/or
- determining an alignment of the contact pattern area on the tooth flank,
wherein
the shape of the contact pattern area (3) is determined as being circular, elliptical, rectangular, square or trapezoidal.

7. The method according to at least one of the preceding claims, **characterized in that**
the modified tooth flank geometry (6), with respect to the provided tooth flank geometry (5), is reduced at each of the at least one determined reduction position (2a to 2h) corresponding to the at least one specific reduction parameter (4a to 4h).

8. The method according to at least one of the preceding claims, **characterized in that**
at least one reduction position (2a to 2h) is positioned on one outer side of the provided tooth flank geometry (5),
at least one reduction position (2a; 2c; 2e; 2g) is positioned on one corner of the provided tooth flank geometry (5), and/or
at least one reduction position (2b; 2d; 2f; 2h) is positioned between two neighboring corners of the provided tooth flank geometry (5).

9. The method according to at least one of the preceding claims, **characterized in that**
at least eight reduction positions (2a to 2h) are determined in such a way that four reduction positions (2a, 2c, 2e, 2g) are positioned each at one corner of the provided tooth flank geometry (5), and each reduction position (2b; 2d; 2f; 2h) is positioned between two neighboring corners of the provided tooth flank geometry (5).

10. The method according to at least one of the preceding claims, **characterized in that**
the step of providing of the geometry of the tooth flank comprises:
- providing toothing information data, and
- calculating the provided tooth flank geometry based on the provided toothing information data,
wherein the toothing information data comprises:
- data which denotes a size and shape of the workpiece,
- data which denotes a type and shape of the toothing, the shape being one of a spur gear, a bevel gear, a crown wheel, a cylindrical gear or a toothed rack,
- data which denotes a toothing shape, the toothing shape being one of a spur toothing, helical toothing, curved toothing, or spiral toothing,
- data which denotes a tooth flank profile shape, the tooth flank profile shape being one of an involute profile, a cycloid profile, or a circular profile,
- data which denotes a size and shape of a tooth geometry of the toothing, and/or
- data which denotes a number of teeth of the toothing.

11. A method for generating control data for the formation of a tooth flank comprising workpiece, with the steps:
- providing toothing information data,
- calculating a model of the workpiece based on the provided toothing information data, comprising the step of calculating a provided tooth flank geometry based on the provided toothing information data, and
- generating the control data for manufacturing the workpiece, comprising the step of generating the control data for forming the tooth flank of the toothing on the workpiece according to the method of at least one of the preceding claims.

12. An apparatus for generating control data for the formation of a tooth flank by milling a workpiece on a numerically controlled machine tool with at least 5 axes, particularly at a universal machine tool, by gradually moving along at processing paths with a milling tool of the machine tool based on generated control data according to a method of at least one of claims 1 to 11, the apparatus comprising:
- a first input means for providing tooth flank geometry,
- a second input means for determining a contact pattern area on the provided tooth flank geometry,
- a third input means for determining parameters for varying the provided tooth flank geometry, and
- a control data generating means for generating control data on the basis of tooth flank geometry modified based on the determined contact pattern area and of the determined parameters.

13. An apparatus or generating control data for the formation of a tooth flank comprising workpiece, comprising:
- an input means (210) for providing toothing information data,
- a model calculating means for calculating a model of the workpiece based on the provided toothing information data, comprising calculating a provided tooth flank geometry based on the provided toothing information data, and
- an apparatus according to claim 12.

14. A numerically controlled machine tool with at least 5 axes, particularly a universal machine tool, for milling a workpiece by gradually moving along at processing paths with a milling tool of the machine tool based on generated control data, comprising an apparatus for generating the control data according to claim 12 or 13.

15. A computer program product, which comprises a computer-readable medium and a computer program recorded thereon, wherein the computer program is saved in the form of a sequence of states which correspond to commands which are designed so as to be processed by a data processing means of a data processing device, so that the method according to one of claims 1 to 11 is executable at the data processing means.

## Revendications

1. Procédé de génération de données de commande pour réaliser un flanc de dent par usinage par fraisage d'une pièce à oeuvrer sur une machine-outil à commande numérique comprenant au moins 5 axes, en particulier sur une machine-outil universelle, en parcourant successivement des trajectoires d'usinage au moyen d'un outil de fraisage de la machine-outil en se basant sur des données de commande générées, comprenant les étapes consistant à :
- définir une géométrie de flanc de dent (5),
- fixer une zone de portée (3) sur la géométrie de flanc de dent (5) définie,
- fixer des paramètres (2a à 2h, 4a à 4h) pour modifier la géométrie de dent de flanc (5) définie,
- générer des données de commande sur la base d'une géométrie de flanc de dent (6) modifiée en fonction de la zone de portée fixée (3) et des paramètres fixés (2a à 2h, 4a à 4h),
**caractérisé en ce que**
la fixation de paramètres pour modifier la géométrie de flanc de dent (5) définie inclut une fixation d'au moins un paramètre de retrait respectif (4a à 4h) à au moins une position de retrait fixée (2a à 2h) sur la géométrie de flanc de dent définie.

2. Procédé selon la revendication 1, **caractérisé en ce que** l'étape consistant à générer des données de commande inclut le calcul d'un modèle de la géométrie de flanc de dent (6) modifiée sur la base de la géométrie de flanc de dent (5) définie, de la zone de portée (3) fixée et des paramètres fixés (2a à 2h, 4a à 4h).

3. Procédé selon la revendication 1 ou 2, dans lequel la géométrie de flanc de dent (6) modifiée ne s'écarte de la géométrie de flanc de dent (5) définie qu'à l'extérieur de la zone de portée fixée (3).

4. Procédé selon l'une au moins des revendications précédentes, **caractérisé en ce que**
la géométrie de flanc de dent (5) définie correspond à une géométrie de flanc de dent ayant une portée maximale sur le flanc de dent (1c) lors du roulement sans charge du flanc de dent (1c) avec un contre-flanc, et/ou après la modification de la géométrie de flanc de dent, la zone de portée fixée (3) décrit une portée lors du roulement sans charge du flanc de dent (1c) avec un contre-flanc, en particulier de telle sorte que la géométrie de flanc de dent (6) modifiée correspond à une géométrie d'un flanc de dent (1c) qui présente une portée correspondant à une zone de portée fixée (3) lors du roulement sans charge avec un contre-flanc.

5. Procédé selon l'une au moins des revendications précédentes, **caractérisé en ce que**
la zone de portée (3) est fixée de telle sorte que lors du roulement sans charge du flanc de dent (1c) avec un contre-flanc, il en résulte une portée de taille, de forme et de position désirées, et/ou
les paramètres pour modifier la géométrie de flanc de dent (5) définie sont fixés de telle sorte que lors du roulement du flanc de dent (1c) avec un contre-flanc sous charge, il en résulte une portée de taille, de forme et de position désirées.

6. Procédé selon la revendication 5, **caractérisé en ce que** la fixation de la zone de portée inclut de :
- fixer une forme de la zone de portée,
- fixer une position de la zone de portée sur le flanc de dent,
- fixer une taille de la zone de portée, et/ou
- fixer une orientation de la zone de portée sur le flanc de dent, la forme de la zone de portée (3) étant en particulier fixée en forme circulaire, elliptique, rectangulaire, carrée ou trapézoïdale.

7. Procédé selon l'une au moins des revendications précédentes, **caractérisé en ce que** par comparaison à la géométrie de flanc de dent (5) définie, la géométrie de flanc de dent (6) modifiée est en retrait en correspondance du paramètre de retrait respectif fixé (4a à 4h) à chacune desdites positions de retrait fixées (2a à 2h).

8. Procédé selon l'une au moins des revendications précédentes, **caractérisé en ce que**
au moins une position de retrait (2a à 2h) est positionnée sur une face extérieure de la géométrie de flanc de dent (5) définie,
au moins une position de retrait (2a ; 2c ; 2e ; 2g) est positionnée sur un coin de la géométrie de flanc de dent (5) définie, et/ou
au moins une position de retrait (2b ; 2d ; 2f; 2h) est positionnée entre deux coins voisins de la géométrie de flanc de dent (5) définie.

9. Procédé selon l'une au moins des revendications précédentes, **caractérisé en ce qu'**au moins huit positions de retrait (2a à 2h) sont fixées de telle sorte que quatre positions de retrait (2a, 2c, 2e, 2g) sont positionnées chacune sur un coin de la géométrie de flanc de dent (5) définie et qu'une position de retrait respective (2b ; 2d ; 2f ; 2h) est positionnée entre deux coins voisins de la géométrie de flanc de dent (5) définie.

10. Procédé selon l'une au moins des revendications précédentes, **caractérisé en ce que** l'étape de la définition d'une géométrie de flanc consiste à :
- définir des données d'information de denture, et
- calculer la géométrie de flanc de dent définie en se basant sur des données d'informations de denture définies,
les données d'informations de denture comprenant :
- des données qui indiquent une taille et une forme de la pièce à oeuvrer,
- des données qui indiquent un type de la forme structurelle de la denture, en particulier une forme structurelle parmi les formes structurelles que sont le pignon droit, le pignon conique, la couronne, le pignon cylindrique et la crémaillère,
- des données qui indiquent une forme de denture, en particulier une forme de denture parmi les formes de denture que sont la denture droite, la denture oblique, la denture en arc, la denture hélicoïdale,
- des données qui indiquent une forme du profil de flanc de dent, en particulier une forme de profil de flanc de dent parmi les formes de profil de flanc de dent que sont le profil à développante, le profil cycloïde et le profil en arc de cercle,
- des données qui indiquent une taille ou une forme d'une géométrie de dent de la denture, et/ou
- des données qui indiquent un nombre de dents de la denture.

11. Procédé de génération de données de commande pour réaliser une pièce à oeuvrer pourvue d'une denture, comprenant les étapes consistant à :
- définir des données d'informations de denture,
- calculer un modèle de la pièce à oeuvrer en se basant sur les données d'informations de denture définies, comprenant l'étape consistant à calculer une géométrie de flanc de dent définie en se basant sur les données d'informations de denture définies, et
- générer des données de commande pour réaliser la pièce à oeuvrer, comprenant l'étape consistant à générer des données de commande pour réaliser un flanc de dent de la denture sur la pièce à oeuvrer par un procédé selon l'une au moins des revendications précédentes.

12. Dispositif conçu pour générer des données de commande pour réaliser un flanc de dent par usinage par fraisage d'une pièce à oeuvrer sur une machine-outil à commande numérique comprenant au moins 5 axes, en particulier sur une machine-outil universelle, en parcourant successivement des trajectoires d'usinage par un outil de fraisage de la machine-outil en se basant sur des données de commande, par un procédé selon l'une au moins des revendications 1 à 11, comportant :
- un premier moyen d'entrée pour définir une géométrie de flanc de dent,
- un second moyen d'entrée pour fixer une zone de portée sur la géométrie de flanc de dent définie,
- un troisième moyen d'entrée pour fixer des paramètres pour modifier la géométrie de dent de flanc définie, et
- un moyen de génération de données de commande pour générer des données de commande en se basant sur une géométrie de flanc de dent modifiée en fonction de la zone de portée fixée et des paramètres fixés.

13. Dispositif de génération de données de commande pour réaliser une pièce à oeuvrer présentant une denture, comportant :
- un moyen d'entrée (210) pour définir des données d'informations de denture,
- un moyen de calcul de modèle pour calculer un modèle de la pièce à oeuvrer en se basant sur les données d'informations de denture définies, consistant à calculer une géométrie de flanc de dent définie en se basant sur les données d'informations de denture définies, et
- un dispositif selon la revendication 12.

14. Machine-outil à commande numérique comprenant au moins 5 axes, en particulier machine-outil universelle, destinée à usiner par fraisage une pièce è oeuvrer en parcourant successivement des trajectoires d'usinage au moyen d'un outil de fraisage de la machine-outil en se basant sur des données de commande générées, comprenant un dispositif pour générer des données de commande selon la revendication 12 ou 13.

15. Produit de programme informatique qui comprend un support lisible à l'ordinateur et un programme informatique mémorisé dans celui-ci, le programme informatique étant mémorisé sous la forme d'une succession d'états qui correspond à des ordres établis pour être traités par un moyen de traitement de données d'un dispositif de traitement de données, de telle sorte qu'un procédé selon l'une des revendications 1 à 11 peut être mis en oeuvre sur le dispositif de traitement de données.
